(19) Europäisches Patentamt
European Patent Office
Office européen des brevets

(11) **EP 3 515 255 B1**

(12) **EUROPÄISCHE PATENTSCHRIFT**

(45) Veröffentlichungstag und Bekanntmachung des Hinweises auf die Patenterteilung:
**13.12.2023 Patentblatt 2023/50**

(21) Anmeldenummer: **17772030.7**

(22) Anmeldetag: **22.09.2017**

(51) Internationale Patentklassifikation (IPC):
**A47C 27/16** (2006.01)   **B33Y 80/00** (2015.01)
**B33Y 10/00** (2015.01)

(52) Gemeinsame Patentklassifikation (CPC):
**A47C 27/16; B33Y 10/00; B33Y 80/00**

(86) Internationale Anmeldenummer:
**PCT/EP2017/074008**

(87) Internationale Veröffentlichungsnummer:
**WO 2018/055079 (29.03.2018 Gazette 2018/13)**

(54) **VERBUND-OBJEKT, UMFASSEND EINEN KÖRPER UND EINEN SCHAUM UND VERFAHREN ZU DESSEN HERSTELLUNG**

COMPOSITE OBJECT COMPRISING A BODY AND A FOAM AND METHOD FOR PRODUCING SAME

OBJET COMPOSITE COMPRENANT UN CORPS ET UNE MOUSSE ET PROCÉDÉ POUR SA FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.09.2016 EP 16190416**

(43) Veröffentlichungstag der Anmeldung:
**31.07.2019 Patentblatt 2019/31**

(60) Teilanmeldung:
**23206995.5**

(73) Patentinhaber: **Stratasys, Inc.**
**Eden Prairie, MN 55344 (US)**

(72) Erfinder:
• **ACHTEN, Dirk**
  **51375 Leverkusen (DE)**
• **BUESGEN, Thomas**
  **51377 Leverkusen (DE)**
• **ALBACH, Rolf**
  **51061 Köln (DE)**
• **AKBAS, Levent**
  **58455 Witten (DE)**

(74) Vertreter: **Davepon, Björn**
**Patentanwaltskanzlei Davepon**
**Schloss Dyck**
**41363 Jüchen (DE)**

(56) Entgegenhaltungen:
US-A1- 2010 119 792     US-A1- 2014 101 816
US-A1- 2015 040 428     US-A1- 2015 064 375
US-A1- 2016 135 537     US-A1- 2016 255 966
US-A1- 2016 263 822

EP 3 515 255 B1

## Beschreibung

Die vorliegende Erfindung betrifft ein Verbund-Objekt, umfassend einen Körper und einen Schaum, dessen Verwendung als stützendes Element oder Lagerungselement sowie ein Verfahren zur Herstellung eines solchen Verbund-Objekts.

Stützende Elemente oder Lagerungselemente können beispielsweise in Form von Matratzen ausgebildet sein. Derartige Matratzen bestehen typischerweise aus Schaumstoffmaterialien, wobei insbesondere die Matratzen aus mehreren übereinanderliegenden Schaumstoffschichten bestehen können. Um den Liegekomfort derartiger Matratzen zu erhöhen, ist es üblich, sogenannte Zonierungen in Matratzen vorzunehmen. Bei einer derartigen Zonierung werden über die Fläche der Matratze verteilt Zonen mit unterschiedlichen elastischen Eigenschaften, das heißt unterschiedlicher Nachgiebigkeit gebildet. Hierbei wird dem Umstand Rechnung getragen, dass eine Matratze beispielsweise im Beinbereich eine andere Nachgiebigkeit aufweisen soll als im Rückenbereich. Zur Ausbildung derartiger Zonierungen in mehrschichtigen Matratzen werden typischerweise in eine mittlere Matratzen-Schicht mit oszillierenden Messern lokal Hohlräume eingearbeitet. Auf die Ober- und Unterseite dieser mittleren Matratzen-Schicht wird dann eine jeweils vollständig geschlossene obere und untere Matratzen-Schicht aufgebracht.

DE 10 2015 100 816 B3 offenbart ein Verfahren zur Herstellung eines körperstützenden Elements, welches von einer Matratze, einem Kissen, einem Sitz oder einem Teil eines Sitzes gebildet ist, umfassend die Verfahrensschritte der Vorgabe von Druckdaten, welche eine personenspezifische dreidimensionale Stützstruktur bilden und der Herstellung des körperstützenden Elements anhand der Druckdaten mittels eines 3D-Druckers. Anhand der Druckdaten können Bereiche unterschiedlicher Elastizität durch die Bildung von Hohlräumen unterschiedlicher Größen und/oder unterschiedlicher Anzahl durch den 3D-Drucker erzeugt werden.

Es wird beschrieben, dass im Verfahren gemäß DE 10 2015 100 816 B3 zur Herstellung des körperstützenden Elements elastische Materialien verwendet werden können, die bei dem mittels des 3D-Druckers durchgeführten Druckprozess mit einem Bindemittel vermischt werden. Als elastische Materialien können elastomere Materialien, insbesondere Kunststoffe, verwendet werden. Der 3D-Drucker kann Sprühmittel aufweisen, wobei aus ersten Sprühmitteln elastische Materialien gesprüht werden und aus zweiten Sprühmitteln Bindemittel gesprüht werden. Die elastischen Materialien können in Pulverform vorliegen.

DE 10 2015 100 816 B3 macht keine Angaben darüber, ob das elastomere Material einen porösen Körper bildet. Es wird beschrieben, dass mittels des 3D-Druckers in Abhängigkeit der Druckdaten Bereiche unterschiedlicher Elastizität des körperstützenden Elements durch die Bildung von Hohlräumen unterschiedlicher Größen und/oder unterschiedlicher Anzahl erzeugt werden. Um eine räumliche Variation der Elastizität der Matratze 3 zu erhalten, können in dem 3D-Drucker gezielt an bestimmten Orten der Matratze Hohlräume eingearbeitet werden. Ein Hohlraum an einem bestimmten Ort wird dadurch generiert, indem über die zweite Sprühmittel kein Bindemittel ausgesprüht wird, so dass sich das über das erste Sprühmittel ausgesprühte elastomere Material dort nicht mit dem Bindemittel zu einer Materialstruktur verbinden kann. Alternativ kann auch über das erste Sprühmittel kein elastomeres Material ausgesprüht werden, so dass kein Ausschuss an pulverförmigem elastomeren Material entsteht.

DE 10 2015 100 816 B3 beschreibt, dass die mit dem 3D-Drucker generierten Hohlräume beliebig gestaltete Geometrien aufweisen können, wobei diese insbesondere in Form von Einschlüssen ausgebildet sein können, die allseitig von der Materialstruktur der Matratze umgeben sein können. Weiterhin wird ausgeführt, dass die Hohlräume in unterschiedlichen Größen erzeugt werden können, wobei insbesondere auch sehr kleine Hohlräume erzeugt werden können, wodurch eine besonders hohe Ortsauflösung der Variation der elastischen Eigenschaften der Matratze erzielt werden soll.

Traditionell werden Polyurethan-Weichschäume in großen Mengen für die Herstellung von Matratzen, Kissen und dergleichen eingesetzt, was in zahlreichen Patent- und nicht-Patentpublikationen dokumentiert ist. Berichte über Materialien, die man als durch additive Verfahren hergestellte Schäume charakterisieren könnte, sind dagegen seltener.

Die Veröffentlichung von Maiti, A. et al. "3D printed cellular solid outperforms traditional stochastic foam in long-term mechanical response", Sci. Rep. 6, 24871; doi: 10.1038/srep24871 (2016) beschreibt mittels des direct ink writing-Verfahrens hergestellte Materialien aus Polydimethylsiloxan-Elastomer (PDMS). Das Material wurde schichtweise aufgebaut, wobei jede Schicht aus gleichmäßig beabstandeten PDMS-Zylindern eines Durchmessers von 250 $\mu$m.

WO 2012/028747 A1 betrifft ein Verfahren zum Herstellen eines dreidimensionalen Objekts aus einem Aufbaumaterial durch ein additives Schichtbauverfahren, bei dem ausgehend von Materialkennwerten des Aufbaumaterials und von vorgegebenen Eigenschaften des herzustellenden Objekts eine interne Struktur des Objekts, die eine Gitterstruktur beinhaltet, berechnet wird und das dreidimensionale Objekt mit dieser internen Struktur durch das additive Schichtbauverfahren hergestellt wird, so dass es die vorgegebenen Eigenschaften aufweist.

Das Einbringen von Funktionalitäten in ein Matrixmaterial wird in vielen Bereichen der Technik praktiziert. Die Funktionalitäten übernehmen dabei meistens Aufgaben der mechanischen Verstärkung des Gesamtkörpers. Als Beispiel sei Stahlbeton genannt, in dem in den Beton eingebrachte Stahlgitter Zugkräfte aufnehmen können. Glasfaser- oder kohlefaserverstärkte Kunstharze sind ein anderes Beispiel für solche Verbundwerkstoffe.

Im Bereich der Polymerschäume ist bekannt (DE 4446450 C1), dass zur Herstellung von Schaumteilen für Rückenlehnen, Sitzflächen und dergleichen von Fahrzeugsitzen flüssiges Polyurethan in eine Form eingespritzt wird, die anschließend geschlossen und beheizt wird, so dass das Polyurethan aufschäumt und das Schaumteil die gewünschte Form erhält. Damit an dem Sitz beziehungsweise dem Schaumteil die Bezüge befestigt werden können, sind in dem Schaumteil sogenannte Einlege- oder Garnierdrähte eingeschäumt, an denen entsprechende in den Bezügen vorgesehene Drähte über aufklemmbare Ringe oder dergleichen befestigbar sind. Die Garnierdrähte werden vor dem Einbringen des flüssigen Polyurethans in die Form eingelegt und über Magnete und Haltestifte an den entsprechenden Stellen in der Form gehalten, damit sie beim Einspritzen und Aufschäumen des Polyurethans nicht verschoben werden. Die Garnierdrähte werden dabei vollständig in das Schaumteil eingeschäumt, wobei lediglich an den Haltepunkten Freiräume verbleiben, die einen Zugang zu den Drähten zum anschließenden Befestigen der Bezüge ermöglichen.

EP 0 991 514 A1 offenbart einen energieabsorbierenden Gegenstand, umfassend eine Oberfläche, in der Stoßfestigkeit gewünscht ist; eingebaut in den energieabsorbierenden Gegenstand ein extrudierter thermoplastischer Schaum, der ein koaleszierter Strangschaum mit einer größeren Festigkeit in einer ersten Richtung als in irgendeiner anderen Richtung ist; wobei der extrudierte thermoplastische Schaum derart orientiert ist, so dass die erste Richtung, in der die Festigkeit am größten ist, annähernd mit der Richtung, in der Stoßfestigkeit gewünscht ist, ausgerichtet ist. Der thermoplastische Schaum kann ein Koextrudat sein, welches Schaumstränge und ein einheitliches zwischengelegtes Profil aus einem nicht-geschäumten thermoplastischen Stoff einschließt.

Polymerkörper mit eingebrachten Funktionalitäten können in bestimmten Fällen auch als interpenetrierende polymere Netzwerke (IPN) betrachtet werden. Solche Netzwerke am Anwendungsfall eines Golfballs sind Gegenstand der Patentanmeldung US 2002/187857 A1.

Die Patentanmeldung CN 1331010 A schließlich offenbart eine Mehrzweck-Verbundplatte für Raum-Dekorationszwecke. Die Platte ist eine geschäumte Platte, die aus einem Verstärkungs-Skelett und einem das Verstärkungs-Skelett umgebenden geschäumten Material aufgebaut ist. Als Vorteile werden eine hohe Festigkeit und eine einfache Kombination beschrieben.

US 2015/0040428 A1 offenbart eine extrudierte Sohle für einen Schuhartikel. Dabei können ausgewählte Teile einer Sohle extrudiert und mit ähnlichen oder anderen Materialien, wie bspw. Urethanschaum, gefüllt werden. So kann beispielsweise eine "Skelettstruktur" aus einem extrudierten Material (z. B. TPU) geformt und mit einem anderen Material (z. B. dosiertem Urethanschaum) gefüllt werden.

Aus US 2010/0119792 A1 sind auxetische Strukturen, insbesondere dreidimensionale auxetische Strukturen, bekannt. Diese auxetischen Strukturen bestehen unter anderem aus Elementarzellen mit vier Basispunkten, A, B, C, D, die die Ecken eines Quadrats definieren, das in einer horizontalen Ebene liegt, vier Stuffer, die sich jeweils von einem jeweiligen Basispunkt zu einem von der Ebene beabstandeten Punkt E erstrecken und vier Tendons, wobei sich jede Tendon von einem jeweiligen Basispunkt zu einem Punkt F zwischen Punkt E und der Ebene erstreckt. Die Stuffer und Tendons können aus allen geeigneten starren Materialien hergestellt sein, einschließlich Metallen, Keramik und Kunststoffen. Dabei kann der Raum um die Elementarzellen mit einem Material wie etwa Schaumstoff gefüllt sein.

In US 2014/0101816 A1 ist ein Kleidungsstück offenbart, welches unter anderem aus mindestens einem Paneel mit einer ersten Kante und einem gegenüberliegenden zweiten Rand besteht, wobei das mindestens eine Paneel eine auxetische Struktur umfasst, die eine primäre Dehnungsrichtung und eine sekundäre Dehnungsrichtung definiert. Das mindestens eine Paneel kann eine Basisschicht und eine auxetische Schicht umfassen. Die auxetische Schicht kann aus jedem für den beschriebenen Zweck geeigneten Material bestehen und durch einen additiven Herstellungsprozess wie selektives Lasersintern gebildet werden. Eine feste Schaumschicht kann sich vollständig durch die Hohlräume der auxetischen Schicht erstrecken, so dass die Oberfläche der auxetischen Schicht im Allgemeinen bündig mit der oberen Oberfläche der Schaumschicht ist.

US 2016/0135537 A1 offenbart ein Schuhwerk bestehend aus einem Obermaterial und eine Sohle, die eine Zwischensohle umfasst. Die Zwischensohle kann eine Gitterstruktur aufweisen, wobei ein Material wie ein Leichtschaum in die Gitterstruktur eingespritzt werden kann, um die offenen Hohlräume zu füllen und so für zusätzliche strukturelle Unterstützung zu sorgen. Die Herstellung des Schuhwerks kann beispielsweise via selektives Lasersintern erfolgen. Beispielhafte Materialien, die bei der Herstellung der Schuhkomponenten verwendet werden können, sind unter anderem TPU.

Eine Aufgabe der vorliegenden Erfindung ist es, mindestens einen Nachteil des Standes der Technik wenigstens zu einem Teil zu überwinden. Weiterhin stellt sich die vorliegende Erfindung die Aufgabe, einen Gegenstand bereitzustellen, der von seinem Komfortempfinden her für einen Benutzer mit einer herkömmlichen Matratze oder einem herkömmlichen Kissen vergleichbar sein kann. Des Weiteren war eine Aufgabe der Erfindung, solch einen Gegenstand möglichst kosteneffizient und/oder individualisiert und/oder ressourcenschonend herstellen zu können.

Erfindungsgemäß gelöst wird die Aufgabe durch ein Verbund-Objekt gemäß Anspruch 1, eine Verwendung gemäß Anspruch 8 und ein Verfahren gemäß Anspruch 9. Vorteilhafte Weiterbildungen sind in den Unteransprüchen angegeben. Sie können beliebig kombiniert werden, sofern sich aus dem Kontext nicht eindeutig das Gegenteil ergibt.

Ein erfindungsgemäßes Verbund-Objekt umfasst einen Körper und einen festen Schaum. Der Körper wurde mittels eines additiven Sinter-Fertigungsverfahrens hergestellt und ist wenigstens formschlüssig mit dem Schaum verbunden, wobei das Material des Körpers von dem des Schaums verschieden ist.

Wie im Zusammenhang mit dem erfindungsgemäßen Verfahren weiter ausgeführt werden wird, ist der Körper mittels eines additiven Sinter-Fertigungsverfahrens hergestellt. Das Material des Körpers kann beispielsweise ein Metall, eine Keramik einschließlich Beton, ein Polymer oder, im Fall von additiven Laminierverfahren, Papier umfassen. Durch formschlüssige und optional stoffschlüssige Verbindung des Schaums mit dem Körper lassen sich synergistische mechanische Eigenschaften für das Verbund-Objekt erreichen. Formschlüssig im Sinne der Erfindung bedeutet, dass sich der Körper und der Schaum mindestens an einer Stelle direkt berühren. Bevorzugt soll unter formschlüssig auch verstanden werden, dass sich der Körper und der Schaum an einer getrennten Bewegung in eine Raumrichtung hindern also nur gemeinsam in eine Raumrichtung bewegt werden können. Stoffschlüssige Verbindungen werden alle Verbindungen genannt, bei denen die Verbindungspartner, also Körper und Schaum, durch atomare oder molekulare Kräfte zusammengehalten werden. Sie sind gleichzeitig nicht lösbare Verbindungen, die sich nur durch Zerstörung der Verbindungsmittel trennen lassen. Methoden zum Erhalt von stoffschlüssigen Verbindungen sind beispielsweise Löten, Schweißen, Kleben, Vulkanisieren oder eine Kombination aus mindesten zwei hiervon. Ein Beispiel aus dem Bau- oder Konstruktionsbereich wären 3D-gedruckte (Teil)Hohlräume wie Mauern, die mindestens zu einem Teil ausgeschäumt werden.

Die Erfindung betrifft ein Verbund-Objekt, umfassend einen Körper und einen festen Schaum. Der Körper umfasst ein räumliches Netzwerk von durch Streben miteinander verbundenen Knotenpunkten und einem zwischen den Streben vorliegenden Raum. In dem zwischen den Streben vorliegenden Raum liegt zumindest teilweise ein Polyurethanschaum in fester Form vor. Der Körper ist zumindest teilweise aus einem thermoplastischen Polyurethan-Elastomer mit einer Dichte von $\geq 1$ kg/l und einer Shore-Härte (DIN ISO 7619-1) von $\geq 50$A und $\leq 98$A gebildet, welches von dem Polymerschaum verschieden ist.

Beispielsweise kann ein visko-elastischer Schaum zusammen mit einem elastischen Körper einen maßgeschneiderten Dämpfer oder eine maßgeschneiderte Matratze verwirklichen.

Im erfindungsgemäßen Verbund-Objekt ist es bevorzugt, dass wenigstens zwei Streben, mehr bevorzugt $\geq 10\%$ der Streben bis $\leq 99,9\%$ der Streben, besonders bevorzugt $\geq 70\%$ der Streben bis $\leq 99,9\%$ der Streben durch den Polymerschaum miteinander verbunden sind. Auf diese Weise kann eine möglichst formschlüssige Verankerung des Schaums innerhalb des Körpers erreicht werden.

Es ist ferner bevorzugt, dass zwischen dem Polymerschaum und den Streben eine stoffschlüssige Verbindung (beispielsweise mit einer Haftung von > 0,5 N/mm) herrscht. Dieses kann beispielsweise dadurch erreicht werden, dass der Körper zumindest teilweise aus einem Polyurethanpolymer gebildet ist und der Schaum ein Polyurethanschaum ist.

Der Polymerschaum ist ein fester Polymerschaum, wobei "fest" als Abgrenzung zu "fließfähig" verstanden werden sollte. Der Schaum kann offenzellig oder geschlossenzellig sein. Ebenfalls sind Integralschäume mit geschlossener Oberfläche denkbar.

Das Verhältnis des Schaumvolumens zum durch die äußeren Abmessungen definierten Volumen des Körpers kann <1, 1 oder >1 sein. Beispielsweise kann der Schaum innerhalb des Körpers vorliegen und der Körper nicht durch den Schaum ausgefüllte Bereiche aufweisen. Der Körper kann aber auch vollständig in den Schaum eingebettet sein, so dass er an keiner Stelle aus dem Schaum herausragt.

In einer bevorzugten Ausführungsform ist der Körper vollständig in den Schaum eingebettet. Bevorzugt erstreckt sich der Schaum an jeder Stelle des Verbund-Objektes um mindestens 0,1 cm, oder bevorzugt um mindestens 0,5 cm, oder bevorzugt um mindestens 1 cm um den Körper. Bevorzugt erstreckt sich der Schaum an jeder Stelle des Verbund-Objektes um den Körper in einem Bereich von 0,5 bis 50 cm, oder bevorzugt in einem Bereich von 1 bis 40 cm den Körper, oder bevorzugt in einem Bereich von 2 bis 30 cm, oder bevorzugt in einem Bereich von 3 bis 20 cm, oder bevorzugt in einem Bereich von 4 bis 10 cm.

Erfindungsgemäß ist vorgesehen, dass der Körper zumindest teilweise aus einem thermoplastischen Polyurethan-Elsatomer gebildet wird, welches von dem Polymerschaum verschieden ist. Die Verschiedenheit kann sich auf physikalische Eigenschaften (zum Beispiel eine unterschiedliche Dichte) und/oder auf chemische Eigenschaften (zum Beispiel chemisch unterschiedliche Materialien) beziehen.

Der Körper kann in einem additiven Fertigungsverfahren ohne externe Stützelemente beim vertikalen Aufbau seiner Struktur gefertigt werden.

Der Raum zwischen den Streben des Körpers macht $\geq 60\%$ bis $\leq 90\%$, des Volumens des Körpers aus. In Kenntnis der Dichte des Ausgangsmaterials für den Körper und der Dichte des Körpers selbst lässt sich dieser Parameter leicht bestimmen.

Die durchschnittliche räumliche Dichte der Knotenpunkte beträgt im Körper $\geq 5000$ Knotenpunkte/m$^3$ bis $\leq 100000$ Knotenpunkte/m$^3$.

Für das Material des Körpers eignen sich insbesondere Elastomere wie Polyurethan-Elastomere. Generell können Elastomere als Thermoset- oder Thermoplast-Materialien oder auch Mischungen davon ausgelegt sein. In dem Körper werden bevorzugt Materialien verwendet, die bei einer Dichte von ≥ 1 kg/l eine Härte nach Shore A-Messung (DIN ISO 7619-1) von ≥ 40 Shore A und ≤ 100 Shore A aufweisen, bevorzugt ≥ 50 Shore A und ≤ 98 Shore A, mehr bevorzugt ≥ 60 Shore A und ≤ 95 Shore A. Bevorzugt sind thermoplastische Polyurethan-Elastomere.

Das Material des Körpers kann in einem ersten Bereich des Körpers von dem Material in einem zweiten Bereich des Körpers verschieden sein. Unterschiedliche Materialien mit entsprechend unterschiedlichen mechanischen Eigenschaften können, nicht wie in der beanspruchten Erfindung, in einem Schmelzschichtungs-Verfahren mit Druckköpfen für mehr als ein Material zur Herstellung des Körpers eingesetzt werden. Es kommen sowohl zwei verschiedene Materialien aus einer Stoffklasse wie beispielsweise zwei thermoplastische Polyurethan-Elastomere mit unterschiedlichen Elastizitätsmoduln, als auch zwei Materialien aus verschiedenen Stoffklassen in Frage.

Der Körper ist zumindest teilweise aus einem thermoplastischen Polyurethan-Elastomer mit einer Dichte von ≥ 1 kg/l und einer Shore-Härte (DIN ISO 7619-1) von ≥ 50A und ≤ 98A gebildet.

In einer weiteren bevorzugten Ausführungsform weist das thermoplastische Polyurethan-Elastomer einen Schmelzbereich (DSC, Differential Scanning Calorimetry; zweite Aufheizung mit Aufheizrate 5 K/min) von ≥ 20 °C bis ≤ 240 °C (bevorzugt ≥ 40 °C bis ≤ 240 °C, mehr bevorzugt ≥ 70 °C bis ≤ 240 °C) auf, eine Shore-Härte gemäß DIN ISO 7619-1 von ≥ 60 Shore A bis ≤ 98 Shore A auf und eine Schmelzvolumenrate (melt volume rate, MVR) gemäß ISO 1133 (240°C, 10 kg) von ≥ 25 bis ≤ 250 (bevorzugt ≥ 30 bis ≤ 180, mehr bevorzugt ≥ 40 bis ≤ 150) cm$^3$/10 min auf.

Bei dieser DSC-Messung wird das Material folgendem Temperaturzyklus unterworfen: 1 Minute bei minus 60 °C, danach Aufheizen auf 250 °C mit 5 Kelvin/Minute, dann Abkühlen auf minus 60 °C mit 5 Kelvin/Minute, dann 1 Minute bei minus 60 °C, dann Aufheizen auf 250 °C mit 5 Kelvin/Minute.

In einer weiteren bevorzugten Ausführungsform weist das thermoplastische Polyurethan-Elastomer einen Schmelzbereich (DSC, Differential Scanning Calorimetry; zweite Aufheizung mit Aufheizrate 5 K/min) von ≥ 20 °C bis ≤ 240 °C (bevorzugt ≥ 40 °C bis ≤ 240 °C, mehr bevorzugt ≥ 70 °C bis ≤ 240 °C) auf, eine Shore-Härte gemäß DIN ISO 7619-1 von ≥ 60 Shore A bis ≤ 98 Shore A auf, bei einer Temperatur T eine Schmelzvolumenrate (melt volume rate, MVR) gemäß ISO 1133 (10 kg) von 5 bis 15 (bevorzugt ≥ 6 bis ≤ 12, mehr bevorzugt ≥ 7 bis ≤ 10) cm$^3$/10 min auf und eine Änderung der Schmelzvolumenrate (10 kg) bei einer Erhöhung dieser Temperatur T um 20 °C von ≤ 90 (bevorzugt ≤ 70, mehr bevorzugt ≤ 50) cm$^3$/10 min auf.

Auch bei dieser DSC-Messung wird das Material folgendem Temperaturzyklus unterworfen: 1 Minute bei minus 60 °C, danach Aufheizen auf 250 °C mit 5 Kelvin/Minute, dann Abkühlen auf minus 60 °C mit 5 Kelvin/Minute, dann 1 Minute bei minus 60 °C, dann Aufheizen auf 250 °C mit 5 Kelvin/Minute.

Dieses thermoplastische Polyurethanelastomer weist bevorzugt ein flaches Aufschmelzverhalten auf. Das Aufschmelzverhalten wird über die Änderung des MVR (melt volume rate) gemäß ISO 1133 bei 5 Minuten Vorheizzeit und 10 kg in Abhängigkeit von der Temperatur bestimmt. Als "flach" gilt ein Aufschmelzverhalten dann, wenn der MVR bei einer Ausgangstemperatur $T_x$ einen Ausgangswert von 5 bis 15 cm$^3$/10 min aufweist und durch Temperaturerhöhung um 20 °C auf $T_{x+20}$ um nicht mehr als 90 cm$^3$/10 min steigt.

Das thermoplastisches Polyurethanelastomerist erhältlich aus der Reaktion der Komponenten:

a) mindestens ein organisches Diisocyanat

b) mindestens eine mit gegenüber Isocyanatgruppen reaktiven Gruppen aufweisenden Verbindung mit einem zahlenmittleren Molekulargewicht ($M_n$) von ≥ 500 g/mol bis ≤ 6000 g/mol und einer zahlenmittleren Funktionalität der Gesamtheit der Komponenten unter b) von ≥ 1,8 bis ≤ 3,0

c) mindestens ein Kettenverlängerungsmittel mit einem Molekulargewicht (Mn) von 60 - 450 g/mol und einer zahlenmittleren Funktionalität der Gesamtheit der Kettenverlängerungsmittel unter c) von 1,8 bis 2,5.

Zur Synthese dieses thermoplastischen Polyurethanelastomers (TPU) seien im Einzelnen beispielhaft als Isocyanatkomponente unter a) genannt: aliphatische Diisocyanate wie Ethylendiisocyanat, 1,4-Tetramethylendiisocyant, 1,5 Pentamethylendiisocyanat, 1,6-Hexamethylendiisocyanat, 1,12-Dodecandiisocyanat, cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische, außerdem aromatische Diisocyanate, wie 2,4-Toluylendiisocyanat, Gemische aus 2,4-Toluylendiisocyanat und 2,6-Toluylendiisocyanat. 4.4'-Diphenylmethandiisocyanat, 2,4'-Diphenylmethandiisocyanat und 2,2'- Diphenylmethandiisocyanat. Gemische aus 2,4'-Diphenylmethandiisocyanat und 4,4'-Diphenylmethandiisocyanat, urethanmodifizierte flüssige 4,4'- Diphenylmethandiisocyanate oder 2,4'- Diphenylmethandiisocyanate, 4,4'-Diisocyanatodiphenylethan-(1 ,2) und 1,5-Naphthylendiisocyanat. Vorzugsweise verwendet werden 1 ,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens so viel Polyisocyanat zugesetzt werden, dass ein noch thermoplastisch verarbeitbares Produkt entsteht. Beispiele für Polyisocyanate sind Triphenylmethan-4,4',4"- triisocyanat und Polyphenyl-polymethylen-polyisocyanate.

Als längerkettige Isocyanat-reaktive Verbindungen unter b) seien beispielhaft solche mit im Mittel mindestens 1,8 bis 3,0 Zerewitinoff-aktiven Wasserstoffatomen und einem zahlenmittleren Molekulargewicht von 500 bis 10000 g/mol genannt. Eingeschlossen sind neben Aminogruppen Thiolgruppen oder Carboxylgruppen aufweisenden Verbindungen insbesondere zwei bis drei, bevorzugt zwei Hydroxylgruppen aufweisende Verbindungen, speziell solche mit zahlenmittleren Molekulargewichten Mn von 500 bis 6000 g/mol, besonders bevorzugt solche mit einem zahlenmittleren Molekulargewicht Mn von 600 bis 4000 g/mol, z.B. Hydroxylgruppen aufweisende Polyesterpolyole, Polyetherpolyole, Polycarbonatpolyole und Polyesterpolyamide. Geeignete Polyesterdiolen können dadurch hergestellt werden, dass man ein oder mehrere Alkylen Oxide mit 2 bis 4 Kohlenstoffatomen im Alkylen Rest mit einem Startermolekül, das zwei aktive Wasserstoffatome gebunden enthält, umsetzt. Als Alkylen Oxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylen Oxide können einzeln, alternierend nacheinander oder als Mischungen verwendet werden. Als Startermoleküle kommen beispielsweise in Betracht Wasser, Aminoalkohole, wie N-Alkyl-diethanolamine, beispielsweise N-Methyldiethanolamin und Diole wie Ethylenglykol, 1,3- Propylenglykol, 1,4-Butandiol, 1,5 Pentandiol und 1,6-Hexandiol. Gegebenenfalls können auch Mischungen von Startermolekülen eingesetzt werden. Geeignete Polyetherdiole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyetherdiole eingesetzt werden, jedoch höchstens in solcher Menge, dass ein noch thermoplastisch verarbeitbares Produkt entsteht. Die im Wesentlichen linearen Polyetherdiole besitzen vorzugsweise zahlenmittlere Molekulargewichte n von 500 bis 6000 g/mol. Sie können sowohl einzeln als auch in Form von Mischungen untereinander zur Anwendung kommen.

Geeignete Polyesterdiole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterdiole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z:B. Ethylenglykol, Diethylenglykol, 1,4-Butandiol, 1,5-Pentandiol, 1,6- Hexandiol, 1,10-Decandiol, 2,2-Dimethyl-l,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, z.B. gegebenenfalls substituierten ω-Caprolacton. Als Polyesterdiole vorzugsweise verwendet werden Ethandiolpolyadipate, 1,4-Butandiolpolyadipate, Ethandiol-1,4-Butandiolpolyadipate, 1,6-Hexandiol-neopentylglykolpolyadipate, 1,6-Hexandiol-1,4-butandiolpolyadipate und Polycaprolactone. Die Polyesterdiole besitzen bevorzugt zahlenmittlere Molekulargewichte Mn von 450 bis 6000 g/mol und können einzeln oder in Form von Mischungen untereinander zur Anwendung kommen.

Die Kettenverlängerungsmittel unter c) besitzen im Mittel 1,8 bis 3,0 Zerewitinoff-aktive Wasserstoffatome und haben ein Molekulargewicht von 60 bis 450 g/mol. Hierunter versteht man neben Aminogruppen, Thiolgruppen oder Carboxylgruppen aufweisenden Verbindungen solche mit zwei bis drei, bevorzugt zwei Hydroxylgruppen.

Als Kettenverlängerungsmittel werden vorzugsweise aliphatische Diole mit 2 bis 14 Kohlenstoffatomen eingesetzt, wie z.B. Ethandiol, 1,2-Propandiol, 1,3-Propandiol, 1,4-Butandiol, 2,3- Butandiol, 1,5-Pentandiol, 1,6-Hexandiol, Diethylenglykol und Dipropylenglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-l,4-butandiol, Hydroxyalkylenether des Hydrochinons, z.B. l,4-Di(b-hydroxyethyl)-hydrochinon, ethoxylierte Bisphenole, z.B. 1,4-Di(b-hydroxyethyl)- bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4- toluylendiamin oder 3,5-Diethyl-2,6-toluylendiamin oder primäre mono-, di-, tri-oder tetraalkylsubstituierte 4,4'-Diaminodiphenylmethane. Besonders bevorzugt werden als Kettenverlängerer Ethandiol, 1 ,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden.

Daneben können auch kleinere Mengen an Triolen zugesetzt werden.

Gegenüber Isocyanaten mono funktionelle Verbindungen können unter f) in Anteilen bis zu 2 Gew.-%, bezogen auf TPU, als sogenannte Kettenabbrecher eingesetzt werden. Geeignet sind z.B. Monoamine wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die gegenüber Isocyanat reaktiven Substanzen sollten bevorzugt so gewählt werden, dass ihre zahlenmittlere Funktionalität zwei nicht wesentlich überschreitet, wenn thermoplastisch verarbeitbare Polyurethanelastomere hergestellt werden sollen. Falls höherfunktionelle Verbindungen eingesetzt werden, sollte durch Verbindungen mit einer Funktionalität <2 die Gesamtfunktionalität entsprechend herabgesetzt werden.

Die relativen Mengen der Isocyanatgruppen und Isocyanat reaktiven Gruppen werden bevorzugt so gewählt, dass das Verhältnis 0,9: 1 bis 1,2:1 beträgt, bevorzugt 0,95: 1 bis 1,1:1.

Die erfindungsgemäß verwendeten thermoplastischen Poyurethanelastomere können als Hilfs- und/oder Zusatzstoffe bis zu maximal 20 Gew.-%, bezogen auf die Gesamtmenge an TPU, der üblichen Hilfs- und Zusatzstoffe enthalten. Typische Hilfs- und Zusatzstoffe sind Katalysatoren, Antiblockmittel, Inhibitoren, Pigmente, Farbstoffe, Flammschutzmittel, Stabilisatoren gegen Alterungs- und Witterungseinflüsse, gegen Hydrolyse, Licht, Hitze und Verfärbung, Weichmacher, Gleit- und Entformungsmittel, fungistatisch und bakteriostatisch wirkende Substanzen, Verstärkungsmittel sowie anorganische und/oder organische Füllstoffe und deren Mischungen.

Beispiele für die Zusatzstoffe sind Gleitmittel, wie Fettsäureester, deren Metallseifen, Fettsäureamide, Fettsäureesteramide und Siliconverbindungen, und Verstärkungsmittel, wie z.B. faserartige Verstärkungsstoffe, wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff- Additive von R.

Gächter u. H. Müller (Hanser Verlag München 1990) oder der DE-A 29 01 774 zu entnehmen.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder die Zinndialkylsalze aliphatischer Carbonsäuren wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen. Die Gesamtmenge an Katalysatoren in den eingesetzten TPU beträgt in der Regel etwa 0 bis 5 Gew.-%, bevorzugt 0 bis 2 Gew.-%, bezogen auf die Gesamtmenge an TPU.

Offenbarte geeignete duroplastische Polyurethan-Elastomere können beispielsweise 2-Komponenten-Gießelastomere (cast elastomers) sein. Sie können nach bekannten Methoden erhalten werden aus einer Reaktionsmischung umfassend:

a) mindestens ein organisches Polyisocyanat

b) mindestens eine mit gegenüber Isocyanatgruppen reaktiven Gruppen aufweisenden Verbindung mit einem zahlenmittleren Molekulargewicht ($M_n$) von ≥ 500 g/mol bis ≤ 6000 g/mol und einer zahlenmittleren Funktionalität der Gesamtheit der Komponenten unter b) von ≥ 2,1

c) optional mindestens ein Kettenverlängerungsmittel mit einem Molekulargewicht (Mn) von 60 - 450 g/mol.

Zu Details bezüglich Polyisocyanaten und NCO-reaktiven Verbindungen sei auf die voranstehenden Ausführungen verwiesen.

In einer weiteren bevorzugten Ausführungsform weist das thermoplastische Polyurethan-Elastomer einen Schmelzbereich (DSC, differential scanning calorimetry; 2. Aufheizung mit Aufheizrate 5 K/min.) von ≥ 20 °C bis ≤ 100 °C auf und einen Betrag der komplexen Viskosität $|\eta^*|$ (bestimmt durch Viskosimetriemessung in der Schmelze mit einem Kegel/Platte-Oszillationsscherviskosimeter bei 100 °C und einer Scherrate von 1/s) von ≥ 10 Pas bis ≤ 1000000 Pas auf.

Dieses thermoplastische Elastomer weist einen Schmelzbereich von ≥ 20 °C bis ≤ 100 °C, vorzugsweise von ≥ 25 °C bis ≤ 90 °C und mehr bevorzugt von ≥ 30 °C bis ≤ 80 °C auf. Bei der DSC-Messung zur Bestimmung des Schmelzbereichs wird das Material folgendem Temperaturzyklus unterworfen: 1 Minute bei -60 °C, danach Aufheizen auf 200 °C mit 5 Kelvin/Minute, dann Abkühlen auf -60 °C mit 5 Kelvin/Minute, dann 1 Minute bei -60 °C, dann Aufheizen auf 200 °C mit 5 Kelvin/Minute.

Es ist möglich, dass das Temperaturintervall zwischen Beginn des Schmelzvorgangs und Ende des Schmelzvorgangs, wie es gemäß dem obigen DSC-Protokoll bestimmt werden kann, ≤ 20 °C, bevorzugt ≤ 10 °C und mehr bevorzugt ≤ 5 °C beträgt.

Dieses thermoplastische Elastomer weist ferner einen Betrag der komplexen Viskosität |$\eta^*$| (bestimmt durch Viskosimetriemessung in der Schmelze mit einem Platte/Platte-Oszillationsviskosimeter gemäß ISO 6721-10 bei 100 °C und einer Scherrate von 1/s) von ≥ 10 Pas bis ≤ 1000000 Pas auf. Vorzugsweise beträgt |$\eta^*$| ≥ 100 Pas bis ≤ 500000 Pas, mehr bevorzugt ≥ 1000 Pas bis ≤ 200000 Pas.

Der Betrag der komplexen Viskosität |$\eta^*$| beschreibt das Verhältnis der viskoelastischen Moduln G' (Speichermodul) und G'' (Verlustmodul) zur Anregungsfrequenz $\omega$ in einer dynamischmechanischen Materialanalyse:

$$|\eta^*| = \sqrt{\left[\left(\frac{G'}{\omega}\right)^2 + \left(\frac{G''}{\omega}\right)^2\right]} = \frac{|G^*|}{\omega}$$

Dieses thermoplastische Elastomer ist vorzugsweise ein thermoplastisches Polyurethan-Elastomer.

In einer weiteren bevorzugten Ausführungsform ist das thermoplastische Polyurethanelastomer erhältlich aus der Reaktion einer Polyisocyanatkomponente und einer Polyolkomponente, wobei die Polyolkomponente ein Polyesterpolyol umfasst, welches einen Stockpunkt (ASTM D5985) von ≥ 25 °C aufweist.

Gegebenenfalls können bei der Reaktion zu diesem Polyurethan weiterhin Diole des Molekulargewichtsbereichs von ≥ 62 bis ≤ 600 g/mol als Kettenverlängerungsmittel eingesetzt werden.

Diese Polyisocyanatkomponente kann ein symmetrisches Polyisocyanat und/oder ein nichtsymmetrisches Polyisocyanat umfassen. Beispiele für symmetrische Polyisocyanate sind 4,4'-MDI und HDI.

Bei nicht-symmetrischen Polyisocyanaten ist die sterische Umgebung einer NCO-Gruppe im Molekül von der sterischen Umgebung einer weiteren NCO Gruppe verschieden. Es reagiert dann eine Isocyanatgruppe schneller mit gegenüber Isocyanaten reaktiven Gruppen, beispielsweise OH-Gruppen, während die verbleibende Isocyanatgruppe weniger reaktiv ist. Eine Folge des nicht-symmetrischen Aufbaus des Polyisocyanats ist, dass die mit diesen Polyisocyanaten aufgebauten Polyurethane auch eine weniger gerade Struktur aufweisen.

Beispiele geeigneter nicht-symmetrischer Polyisocyanate sind 2,2,4-Trimethylhexamethylendiisocyanat, Ethylethylendiisocyanat, nicht-symmetrische Isomere des Dicyclohexylmethandiisocyanat (H$_{12}$-MDI), nicht-symmetrische Isomere des 1,4-Diisocyanatocyclohexan, nicht-symmetrische Isomere des 1,3-Diisocyanatocyclohexan, nicht-symmetrische Isomere des 1,2-Diisocyanatocyclohexan, nicht-symmetrische Isomere des 1,3-Diisocyanatocyclopentan, nicht-symmetrische Isomere des 1,2-Diisocyanatocyclopentan, nicht-symmetrische Isomere des 1,2-Diisocyanatocyclobutan, 1-Isocyanatomethyl-3-isocyanato-1,5,5-trimethylcyclohexan (Isophorondiisocyanat, IPDI), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1-pentyl-cyclohexan, Norbonandiisocyanatomethyl, 2,4'-Diphenylmethan-diisocyanat (MDI), 2,4- und 2,6-Toluylendiisocyanat (TDI) sowie Derivate der aufgeführten Diisocyanate, insbesondere dimerisierte oder trimerisierte Typen.

Bevorzugt sind 4,4'-MDI oder eine Mischung enthaltend IPDI und HDI als Polyisocyanatkomponente.

Diese Polyolkomponente weist ein Polyesterpolyol auf, welches einen Stockpunkt (No Flow Point, ASTM D5985) von ≥ 25 °C, vorzugsweise ≥ 35 °C, mehr bevorzugt ≥ 35 °C bis ≤ 55 °C aufweist. Zur Bestimmung des Stockpunkts wird ein Messgefäß mit der Probe in eine langsame Rotation (0.1 U/min) versetzt. Ein flexibel gelagerter Messkopf taucht in die Probe ein und wird bei Erreichen des Stockpunkts durch die sprunghafte Zunahme der Viskosität aus seiner Lage wegbewegt, die resultierende Kippbewegung löst einen Sensor aus.

Beispiele für Polyesterpolyole, welche solch einen Stockpunkt aufweisen können, sind Reaktionsprodukte von Phthalsäure, Phthalsäureanhydrid oder symmetrischen $\alpha,\omega$-C$_4$- bis C$_{10}$-Dicarbonsäuren mit einem oder mehreren C$_2$- bis Cio-Diolen. Sie weisen bevorzugt ein zahlenmittleres Molekulargewicht M$_n$ von ≥ 400 g/mol bis ≤ 6000 g/mol auf. Geeignete Diole sind insbesondere Monoethylenglykol, 1,4-Butandiol, 1,6-Hexandiol und Neopentylglykol.

Bevorzugte Polyesterpolyole sind nachfolgend unter Angabe ihrer Säure- und Diolkomponenten angegeben: Adipinsäure + Monoethylenglykol; Adipinsäure + Monoethylenglykol + 1,4-Butandiol; Adipinsäure + 1,4-Butandiol; Adipinsäure + 1,6-Hexandiol + Neopentylglykol; Adipinsäure + 1,6-Hexandiol; Adipinsäure + 1,4-Butandiol + 1,6-Hexandiol; Phthalsäure(anhydrid) + Monoethylenglykol + Trimethylolpropan; Phthalsäure(anhydrid) + Monoethylenglykol. Bevorzugte Polyurethane werden aus einer Mischung enthaltend IPDI und HDI als Polyisocyanatkomponente und einer Polyolkomponente enthaltend ein zuvor genanntes bevorzugtes Polyesterpolyol erhalten. Besonders bevorzugt ist die Kombination einer Mischung enthaltend IPDI und HDI als Polyisocyanatkomponente mit einem Polyesterpolyol aus Adipinsäure + 1,4-Butandiol + 1,6-Hexandiol zum Aufbau der Polyurethane.

Es ist ferner bevorzugt, dass diese Polyesterpolyole eine OH-Zahl (DIN 53240) von ≥ 25 bis ≤ 170 mg KOH/g und/oder eine Viskosität (75 °C, DIN 51550) von ≥ 50 bis ≤ 5000 mPas aufweisen.

Als Beispiel genannt sei ein Polyurethan, das erhältlich ist aus der Reaktion einer Polyisocyanatkomponente und einer Polyolkomponente, wobei die Polyisocyanatkomponente ein HDI und IPDI umfasst und wobei die Polyolkomponente ein Polyesterpolyol umfasst, welches aus der Reaktion einer Reaktionsmischung umfassend Adipinsäure sowie 1,6-Hexandiol und 1,4-Butandiol mit einem Molverhältnis dieser Diole von ≥ 1:4 bis ≤ 4:1 erhältlich ist und welches ein zahlenmittleres Molekulargewicht $M_n$ (GPC, gegen Polystyrol-Standards) von ≥ 4000 g/mol bis ≤ 6000 g/mol aufweist. Solch ein Polyurethan kann einen Betrag der komplexen Viskosität $|\eta^*|$ (bestimmt durch Viskosimetriemessung in der Schmelze mit einem Platte/Platte-Oszillationsviskosimeter gemäß ISO 6721-10 bei 100 °C und einer Scherrate von 1/s) von ≥ 4000 Pas bis ≤ 160000 Pas aufweisen.

Ein weiteres Beispiel für ein geeignetes Polyurethan ist:

1. Weitgehend lineare, endständige Hydroxylgruppen aufweisende Polyesterpolyurethane wie in EP 0192946 A1 beschrieben, hergestellt durch Umsetzung von

a) Polyesterdiolen eines über 600 liegenden Molekulargewichts und gegebenenfalls

b) Diolen des Molekulargewichtsbereichs von 62 bis 600 g/mol als Kettenverlängerungsmittel mit

c) aliphatischen Diisocyanaten unter Einhaltung eines Äquivalentverhältnisses von Hydroxylgruppen der Komponenten a) und b) zu Isocyanatgruppen der Komponente c) von 1:0,9 bis 1:0,999, wobei die Komponente a) zu mindestens 80 Gew.-% aus Polyesterdiolen des Molekulargewichtsbereichs 4000 bis 6000 auf Basis von (i) Adipinsäure und (ii) Gemischen aus 1,4-Dihydroxybutan und 1,6-Dihydroxyhexan im Molverhältnis der Diole von 4:1 bis 1:4 besteht.

In den unter 1. genannten Polyesterpolyurethanen ist bevorzugt, dass die Komponente a) zu 100 % aus einem Polyesterdiol des Molekulargewichtsbereichs 4000 bis 6000 besteht, bei deren Herstellung als Diolgemisch ein Gemisch aus 1,4-Dihydroxybutan und 1,6-Dihydroxyhexan im Molverhältnis von 7:3 bis 1:2 verwendet worden ist.

In den unter 1. genannten Polyesterpolyurethanen ist ferner bevorzugt, dass die Komponente c) IPDI und weiterhin HDI enthält.

In den unter 1. genannten Polyesterpolyurethanen ist ferner bevorzugt, dass bei ihrer Herstellung als Komponente b) Alkandiole, ausgewählt aus der Gruppe bestehend aus 1,2-Dihydroxyethan, 1,3-Dihydroxypropan, 1,4-Dihydroxybutan, 1,5-Dihydroxypentan, 1,6-Dihydroxyhexan und beliebigen Gemischen dieser Diole, in einer Menge von bis zu 200 Hydroxyläquivalentprozent, bezogen auf die Komponente a), mitverwendet worden sind.

Es ist ferner möglich, dass das thermoplastische Elastomer nach Erwärmen auf 100 °C und Abkühlen auf 20 °C bei einer Abkühlrate von 4 °C/min in einem Temperaturintervall von 25 °C bis 40 °C für ≥ 1 Minute (bevorzugt ≥ 1 Minute bis ≤ 30 Minuten, mehr bevorzugt ≥ 10 Minuten bis ≤ 15 Minuten), ein Speichermodul G' (bestimmt bei der jeweils herrschenden Temperatur mit einem Platte/Platte-Oszillationsviskosimeter gemäß ISO 6721-10 bei einer Scherrate von 1/s) von ≥ 100 kPa bis ≤ 1 MPa auf und nach Abkühlen auf 20 °C und Lagerung für 20 Minuten ein Speichermodul G' (bestimmt bei 20 °C mit einem Platte/Platte-Oszillationsviskosimeter gemäß ISO 6721-10 bei einer Scherrate von 1/s) von ≥ 10 MPa aufweist.

Der Schaum ist zumindest teilweise aus einem Polyurethanschaum gebildet. Geeignete Polyurethanschäume können nach dem Fachmann bekannten Methoden erhalten werden. So kann die Reaktionsmischung zuvor erwähnte Polyisocyanate und Polyole enthalten sowie zusätzlich chemische und/oder physikalische Treibmittel.

In einer weiteren bevorzugten Ausführungsform weist das Verbund-Objekt einen Druckverformungsrest nach 10% Kompression (DIN ISO 815-1) von ≤ 2%, bevorzugt ≤ 1%, mehr bevorzugt ≤ 0.5%, auf.

In einer weiteren bevorzugten Ausführungsform ist das polymere Material ein vernetztes Polyacrylat, welches mittels einer radikalischen Vernetzung ausgehend von flüssigen Ausgangsprodukten in Gegenwart von Photoinitiatoren über die Einwirkung actinischer Strahlung vernetzt wurde.

Die Streben weisen eine durchschnittliche Länge von ≥ 500 μm bis ≤ 50 mm und bevorzugt ≥ 750 μm bis ≤ 20 mm auf. Die Streben weisen eine durchschnittliche Dicke von ≥ 500 μm bis ≤ 2.5 mm und bevorzugt ≥ 750 μm bis ≤ 1 mm auf. Wenn sich über den Verlauf einer einzelnen Strebe sich deren Dicke ändert, was durchaus konstruktiv gewollt sein kann, wird zunächst für die einzelne Strebe die durchschnittliche Dicke bestimmt und anschließend dieser Wert für die Berechnung der durchschnittlichen Dicke der Gesamtheit der Streben verwendet. In mindestens einer Raumrichtung weist der Körper eine Stauchhärte (40% Stauchung, DIN EN ISO 3386-1:2010-09) von ≥ 20 bis ≤ 70 kPa und bevorzugt ≥ 30 bis ≤ 40 kPa auf.

In dem Körper sind die Knotenpunkte in zumindest einem Teil des Volumens des Körpers periodisch wiederkehrend verteilt. Wenn die Knotenpunkte in einem Volumen periodisch wiederkehrend verteilt sind, lässt sich dieser Umstand mit den Mitteln der Kristallographie beschreiben. Die Knotenpunkte können entsprechend den 14 Bravais-Gittern angeordnet sein: kubisch-primitiv (sc, simple cubic), kubisch-raumzentriert (bcc, body centered cubic), kubisch-flächenzentriert (fcc, face centered cubic), tetragonal-primitiv, tetragonal-raumzentriert, orthorhombisch-primitiv, orthorhombisch-basiszentriert, orthorhombisch-raumzentriert, orthorhombisch-flächenzentriert, hexagonal-primitiv, rhomboedrisch, monoklin-primitiv, monoklin-basiszentriert und triklin. Bevorzugt sind die kubischen Gitter sc, fcc und bcc.

In einer weiteren bevorzugten Ausführungsform wird in dem Körper der Raum in Form von sich gegenseitig durchdringenden ersten, zweiten und dritten Kanalgruppen gebildet, wobei eine Mehrzahl von individuellen Kanälen innerhalb ihrer jeweiligen Kanalgruppe parallel zueinander verlaufen und die erste Kanalgruppe, die zweite Kanalgruppe und die dritte Kanalgruppe sich in unterschiedliche Raumrichtungen erstrecken.

In einer weiteren bevorzugten Ausführungsform beträgt in dem Körper der durchschnittliche minimale Winkel zwischen benachbarten Streben $\geq 30°$ bis $\leq 140°$, bevorzugt $\geq 45°$ bis $\leq 120°$, mehr bevorzugt $\geq 50°$ bis $\leq 100°$. Dieser Winkel wird immer im unbelasteten Zustand des Körpers ermittelt. Benachbarte Streben sind solche Streben, die einen gemeinsamen Knotenpunkt aufweisen. Der minimale Winkel zwischen zwei benachbarten Streben ist so zu verstehen, dass bei Betrachtung einer Strebe, welche mehrere benachbarte Streben aufweist, die zu der betrachteten Strebe unterschiedliche Winkel ausbilden, der kleinste dieser Winkel ausgewählt wird. Ein Beispiel hierfür ist ein, in der Sprache der Chemie ausgedrückt, oktaedrisch koordinierter Knotenpunkt. Von diesem Knotenpunkt entspringen sechs Streben, wobei sich gegenüberliegende Streben einen Winkel von 180° zueinander ausbilden und in einer Ebene direkt aneinander grenzende Streben einen Winkel von 90° zueinander ausbilden. In diesem Beispiel wäre der minimale Winkel zwischen benachbarten Streben 90°.

In dem Körper ist die räumliche Dichte der Knotenpunkte in einem ersten Bereich des Körpers von der räumlichen Dichte der Knotenpunkte in einem zweiten Bereich des Körpers verschieden. In geometrischer Hinsicht wird hierbei der Mittelpunkt der Knotenpunkte betrachtet. Die räumliche Dichte der Knotenpunkte kann im ersten Bereich des Körpers beispielsweise $\geq 1$ Knotenpunkte/cm$^3$ bis $\leq 200$ Knotenpunkte/cm$^3$, bevorzugt $\geq 2$ Knotenpunkte/cm$^3$ bis $\leq 100$ Knotenpunkte/cm$^3$, mehr bevorzugt $\geq 3$ Knotenpunkte/cm$^3$ bis $\leq 60$ Knotenpunkte/cm$^3$ betragen. Die räumliche Dichte der Knotenpunkte kann, unter der Maßgabe, dass sie von der Dichte im ersten Bereich verschieden ist, im zweiten Bereich des Körpers beispielsweise $\geq 2$ Knotenpunkte/cm$^3$ bis $\leq 200$ Knotenpunkte/cm$^3$, bevorzugt $\geq 5$ Knotenpunkte/cm$^3$ bis $\leq 100$ Knotenpunkte/cm$^3$, mehr bevorzugt $\geq 10$ Knotenpunkte/cm$^3$ bis $\leq 60$ Knotenpunkte/cm$^3$ betragen.

Es ist auch möglich, die Unterschiede in der räumlichen Dichte dadurch auszudrücken, dass die räumliche Dichte der Knotenpunkte in einem ersten Bereich des Körpers das $\geq 1{,}1$-fache bis $\leq 10$-fache, vorzugsweise das $\geq 1{,}5$-fache bis $\leq 7$-fache, mehr bevorzugt das $\geq 2$-fache bis $\leq 5$-fache der räumlichen Dichte der Knotenpunkte in einem zweiten Bereich des Körpers beträgt.

Ein konkretes Beispiel wäre ein Körper mit einer Dichte der Knotenpunkte in einem ersten Bereich von $\geq 39$ Knotenpunkte/cm$^3$ bis $\leq 41$ Knotenpunkte/cm$^3$ und einer Dichte der Knotenpunkte in einem zweiten Bereich von $\geq 19$ Knotenpunkte/cm$^3$ bis $\leq 21$ Knotenpunkte/cm$^3$.

Die vorliegende Erfindung betrifft weiterhin die Verwendung eines erfindungsgemäßen Verbund-Objekts als stützendes Element und/oder Lagerungselement. Für die Verwendung des erfindungsgemäßen Verbund-Objekts als Kissen, Matratze und dergleichen kann es vorteilhaft sein, wenn es Bereiche unterschiedlicher mechanischer Eigenschaften und insbesondere Bereiche mit unterschiedlicher Stauchhärte und gegebenenfalls unterschiedlichen tan δ-Werten aufweist. So kann eine Matratze im Bereich der Schulterpartien konfiguriert sein, um eine auf der Seite liegende Person tiefer einsinken zu lassen als den restlichen Partien der Person, damit die Person insgesamt bezogen auf die Wirbelsäule immer noch gerade liegt.

Ein weiterer offenbarter Gegenstand ist ein Verfahren zur Herstellung eines Verbund-Objekts, umfassend die Schritte:

I) Herstellen eines Körpers mittels eines additiven Fertigungsverfahrens;

II) Kontaktieren des Körpers mit einer einen Schaum bildenden Zusammensetzung, wobei die Zusammensetzung zumindest teilweise in das Innere des Körpers eindringt;

III) Ausbilden eines Schaums unter Erhalt des Verbund-Objekts.

Ein weiterer Gegenstand der vorliegenden Erfindung ist ein Verfahren zur Herstellung eines erfindungsgemäßen Verbund-Objekts, umfassend die Schritte:

I') Herstellen eines Körpers mittels eines additiven Sinter-Fertigungsverfahrens zumindest teilweise aus einem thermoplastischen Polyurethan-Elastomer mit einer Dichte von $\geq 1$ kg/l und einer Shore-Härte (DIN ISO 7619-1) von $\geq 50A$ und $\leq 98A$, wobei der Körper ein räumliches Netzwerk von durch Streben miteinander verbundenen Knotenpunkten und einem zwischen den Streben vorliegenden Raum umfasst;

II') Kontaktieren des Körpers mit einer zu einem Polyurethanschaum reagierenden Reaktionsmischung, wobei die Reaktionsmischung zumindest teilweise in den Raum zwischen den Streben des Körpers eindringt;

III') Reagierenlassen der Reaktionsmischung zu einem Polyurethanschaum unter Erhalt des Verbund-Objekts,

wobei der Körper ein räumliches Netzwerk von durch Streben (100) miteinander verbundenen Knotenpunkten (200) und einem zwischen den Streben (100) vorliegenden Raum (300) umfasst, der Raum zwischen den Streben (100) des Körpers (10, 20) ≥ 60% bis ≤ 90% des Volumens des Körpers ausmacht,

in dem Körper (10, 20) die Streben (100) eine durchschnittliche Länge von ≥ 500 μm bis ≤ 50 mm aufweisen, die Streben (100) eine durchschnittliche Dicke von ≥ 500 μm bis ≤ 2.5 mm aufweisen und der Körper in mindestens einer Raumrichtung eine Stauchhärte (40% Stauchung, DIN EN ISO 3386-1:2010-09) von ≥ 20 bis ≤ 70 kPa aufweist,

in dem Körper (10, 20) die Knotenpunkte (200) in zumindest einem Teil des Volumens des Körpers (10, 20) periodisch wiederkehrend verteilt sind,

in dem Körper (20) die räumliche Dichte der Knotenpunkte (200) in einem ersten Bereich des Körpers (20) von der räumlichen Dichte der Knotenpunkte (200) in einem zweiten Bereich des Körpers (20) verschieden ist und die durchschnittliche räumliche Dichte der Knotenpunkte (200) im Körper (10, 20) ≥ 5000 Knotenpunkte/m³ bis ≤ 100000 Knotenpunkte/m³ beträgt.

Gemäß Schritt I) oder I') wird der Körper mittels eines additiven Fertigungsverfahrens hergestellt. Mittels eines additiven Fertigungsverfahrens ist eine individualisierte Anpassung beispielsweise der Dämpfungseigenschaften eines Körpers möglich. Individualisiert bedeutet hierbei, dass nicht nur Einzelstücke erzeugt werden können, sondern dass auch beispielsweise die Dämpfungseigenschaften eines Stütz- oder Lagerungselements an unterschiedlichen Punkten wunschgemäß und mit eingestellt werden können. Damit kann beispielsweise eine Matratze auf einen Kunden nach den anatomischen Erfordernissen beziehungsweise Bedürfnissen individuell erstellt werden. Um beispielsweise eine optimale Druckverteilung beim Liegen auf der Matratze zu erreichen, kann zunächst ein Druckprofil des Körpers auf einer Sensorfläche aufgenommen und die so gewonnenen Daten für die Individualisierung der Matratze verwendet werden. Die Daten werden dann dem additiven Fertigungsverfahren in an sich bekannter Weise zugeführt.

Das erfindungsgemäße additive Fertigungsverfahren ist ein Sinterverfahren.

Sinterverfahren sind im Kontext der vorliegenden Erfindung Verfahren, welche insbesondere thermoplastische Pulver nutzen, um Gegenstände schichtweise aufzubauen. Hierbei werden über einen so genannten Beschichter dünne Pulverschichten aufgetragen und anschließend mittels einer Energiequelle selektiv aufgeschmolzen. Das umgebende Pulver stützt dabei die Bauteilgeometrie. Komplexe Geometrien sind dadurch wirtschaftlicher zu fertigen als beim FDM-Verfahren. Zudem können verschiedene Gegenstände eng gepackt im so genannten Pulverbett angeordnet beziehungsweise gefertigt werden. Aufgrund dieser Vorteile gelten pulverbasierte additive Fertigungsverfahren zu den wirtschaftlichsten additiven Herstellungsverfahren am Markt. Sie werden daher überwiegend von industriellen Nutzern verwendet. Beispiele für pulverbasierte additive Fertigungsverfahren sind das sogenannte Lasersintern (SLS, Selective Laser Sintering) oder das High Speed Sintering (HSS). Sie unterscheiden sich untereinander in der Methode, um die Energie für das selektive Aufschmelzen in den Kunststoff einzutragen. Beim Lasersinterverfahren erfolgt der Energieeintrag über einen gelenkten Laserstrahl. Beim so genannten High Speed Sintering (HSS)-Verfahren erfolgt der Energieeintrag über Infrarot (IR')-Strahler in Kombination mit einem selektiv in das Pulverbett gedruckten IR-Absorber. Das so genannte Selective Heat Sintering (SHS) nutzt die Druckeinheit eines konventionellen Thermodruckers, um thermoplastische Pulver selektiv aufzuschmelzen. Bevorzugt sind selektive Lasersinterverfahren (SLS').

Der Begriff "Schmelzschichtungsverfahren" bezeichnet ein Fertigungsverfahren aus dem Bereich der additiven Fertigung, mit dem ein Werkstück schichtweise beispielsweise aus einem schmelzfähigen Kunststoff aufgebaut wird. Der Kunststoff kann mit oder ohne weitere Zusätze wie Fasern eingesetzt werden. Maschinen für das FFF gehören zur Maschinenklasse der 3D-Drucker. Dieses Verfahren basiert auf der Verflüssigung eines drahtförmigen Kunststoff- oder Wachsmaterials durch Erwärmung. Beim abschließenden Abkühlen erstarrt das Material. Der Materialauftrag erfolgt durch Extrusion mit einer in Bezug auf eine Fertigungsebene frei verfahrbaren Heizdüse. Dabei kann entweder die Fertigungsebene fix sein und die Düse ist frei verfahrbar oder eine Düse ist fix und ein Substrattisch (mit einer Fertigungsebene) kann verfahren werden oder beide Elemente, Düse und Fertigungseben, sind verfahrbar. Die Geschwindigkeit mit der Untergrund und Düse zueinander verfahrbar sind liegt bevorzugt in einem Bereich von 1 bis 200 mm/s. Die Schichtdicke liegt je nach Anwendungsfall in einem Bereich von 0,025 und 1,25 mm, der Austrittsdurchmesser des Materialstrahls (Düsenauslassdurchmesser) von der Düse beträgt typischerweise mindestens bei 0,05 mm.

Bei der schichtweisen Modellherstellung verbinden sich damit die einzelnen Schichten zu einem komplexen Teil. Der Aufbau eines Körpers erfolgt üblich indem wiederholt, jeweils zeilenweise eine Arbeitsebene abgefahren wird (Bildung einer Schicht) und dann die Arbeitsebene "stapelnd" nach oben verschoben wird (Bilden mindestens einer weiteren Schicht auf der ersten Schicht), sodass eine Form schichtweise entsteht. Die Austrittstemperatur der Stoffmischungen aus der Düse kann beispielsweise 80 °C bis 420 °C betragen. Es ist zudem möglich, den Substrattisch zu beheizen, beispielsweise auf 20 °C bis 250 °C. Hierdurch kann ein zu schnelles Abkühlen der aufgetragenen Schicht verhindert werden, sodass eine weitere, hierauf aufgetragene Schicht sich ausreichend mit der ersten Schicht verbindet.

In Schritt II) des offenbarten Verfahrens erfolgt das Kontaktieren des Körpers mit einer einen Schaum bildenden Zusammensetzung, wobei die Zusammensetzung zumindest teilweise in das Innere des Körpers eindringt. Dann kann gemäß Schritt III) das Ausbilden eines Schaums unter Erhalt des Verbund-Objekts erfolgen.

In Schritt II') des Verfahrens wird der Körper mit einer zu einem Polymerschaum reagierenden Reaktionsmischung kontaktiert. Es handelt sich um eine zu einem Polyurethanschaum reagierende Reaktionsmischung in Kombination mit einem Körper, dessen Material ein thermoplastisches Polyurethan-Elastomer enthält. Das Kontaktieren erfolgt derart, dass die Reaktionsmischung zumindest teilweise in den Raum zwischen den Streben des Körpers eindringt. Dann kann gemäß Schritt III') die Reaktionsmischung zum Polymerschaum reagieren. Der Schaum kann offenzellig oder geschlossenzellig sein. Das Kontaktieren in Schritt II) kann in geschlossenen oder offenen Formen stattfinden. Der umschäumte Körper kann auch einen Teil der begrenzenden Form des Schaums bilden. Eine Nachbearbeitung der umschäumten Produkte durch gezieltes Entfernen von überschüssigem Schaum oder von Teilen des Körpers wie zum Beispiel Stützstrukturen ist ebenfalls denkbar.

Das Kontaktieren in Schritt II') kann in geschlossenen oder offenen Formen stattfinden. Der umschäumte Körper kann auch einen Teil der begrenzenden Form des Schaums bilden. Eine Nachbearbeitung der umschäumten Produkte durch gezieltes Entfernen von überschüssigem Schaum oder von Teilen des Körpers wie zum Beispiel Stützstrukturen ist ebenfalls denkbar.

Auch im erfindungsgemäßen Verfahren mit Schritten I'), II') und III') ist es vorgesehen, dass der Körper zumindest teilweise aus einem thermoplastischen Polyurethan-Elastomer gebildet wird, welches von dem Polymerschaum verschieden ist. Die Verschiedenheit kann sich auf physikalische Eigenschaften (zum Beispiel eine unterschiedliche Dichte) und/oder auf chemische Eigenschaften (zum Beispiel chemisch unterschiedliche Materialien) beziehen.

Die vorliegende Erfindung wird anhand der nachfolgenden Figuren unter Bezugnahme auf bevorzugte Ausführungsformen näher erläutert, ohne jedoch darauf beschränkt zu sein. Es zeigen:

FIG. 1    einen Körper in einer ersten Ansicht

FIG. 2    den Körper aus FIG. 1 in einer anderen Ansicht

FIG. 3    ein offenbartes Verbund-Objekt

FIG. 4    einen weiteren Körper

FIG. 5    ein erfindungsgemäßes Verbund-Objekt

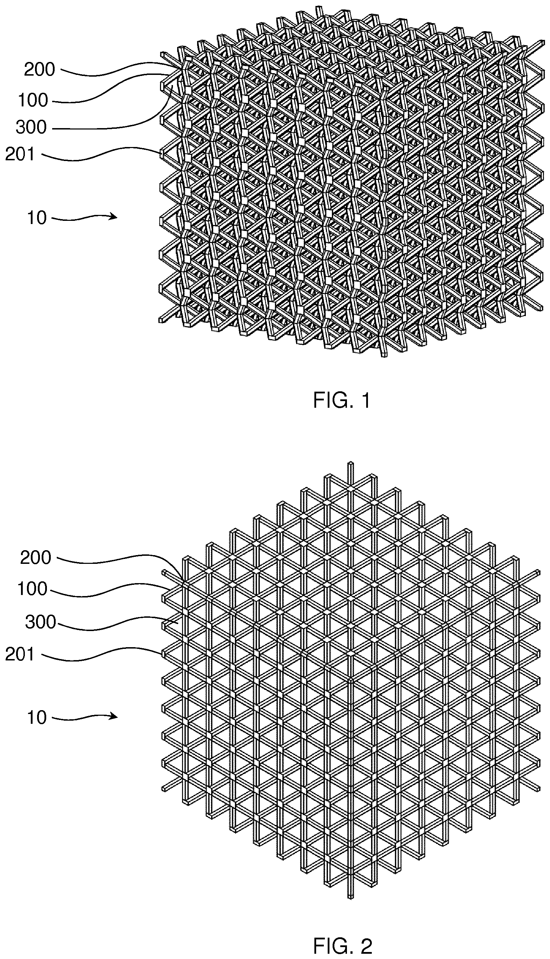

FIG. 1 zeigt einen Körper 10, wie er zur Herstellung eines erfindungsgemäßen Verbund-Objekts eingesetzt werden kann, in perspektivischer Ansicht mit einem räumlichen Netzwerk von durch Streben 100 miteinander verbundenen Knotenpunkten 200. Zwischen den Streben 100 liegt der Raum 300 vor. Auf den Kanten des Körpers 10 liegen angeschnittene Knotenpunkte 201 vor, deren Streben nur in das Innere des Körpers 10 ragen. FIG. 2 zeigt den gleichen Körper 10 in einer isometrischen Ansicht.

Die Knotenpunkte 200 können im Körper 10 in zumindest einem Teil seines Volumens regelmäßig verteilt sein. Genauso können sie in zumindest einem Teil seines Volumens unregelmäßig verteilt sein. Es ist auch möglich, dass der Körper 10 ein oder mehrere Teilvolumen aufweist, in denen die Knotenpunkte 200 regelmäßig verteilt sind und ein oder mehrere Teilvolumen aufweist, in denen die Knotenpunkte 200 unregelmäßig verteilt sind.

Je nach Aufbau des Netzwerks aus Streben 100 und Knotenpunkten 200 im Körper 10 können bestimmte mechanische Eigenschaften auch eine Funktion der Raumrichtung sein, in der sie am Körper bestimmt werden. Dieses ist beispielsweise für den in FIG. 1 und 2 gezeigten Körper 10 der Fall. Entlang der Raumrichtungen, die den Basisvektoren der Elementarzelle entsprechen, können insbesondere die Stauchhärte und der tan δ-Wert anders sein als beispielsweise entlang einer Raumrichtung, die alle drei Basisvektoren als Komponenten beinhaltet.

Der Raum 3macht ≥ 60% bis ≤ 90 %, des Volumens des Körpers 10 aus. In Kenntnis der Dichte des Ausgangsmaterials für den Körper und der Dichte des Körpers selbst lässt sich dieser Parameter leicht bestimmen.

Die Knotenpunkte 200 sind in zumindest einem Teil des Volumens des Körpers 10 periodisch wiederkehrend verteilt. Wenn die Knotenpunkte 200 in einem Volumen periodisch wiederkehrend verteilt sind, lässt sich dieser Umstand mit den Mitteln der Kristallographie beschreiben. Die Knotenpunkte können entsprechend den 14 Bravais-Gittern angeordnet sein: kubisch-primitiv (sc, simple cubic), kubisch-raumzentriert (bcc, body centered cubic), kubisch-flächenzentriert (fcc, face centered cubic), tetragonal-primitiv, tetragonal-raum zentriert, orthorhombisch-primitiv, orthorhombisch-basiszentriert, orthorhombisch-raumzentriert, orthorhombisch-flächenzentriert, hexagonal-primitiv, rhomboedrisch, monoklin-primitiv, monoklin-basiszentriert und triklin. Bevorzugt sind die kubischen Gitter sc, fcc und bcc.

In der kristallographischen Betrachtungsweise bleibend kann die Anzahl der Streben 100, über die ein Knotenpunkt 200 mit anderen Knotenpunkten verbunden ist, als die Koordinationszahl des Knotenpunkts 200 angesehen werden. Die durchschnittliche Anzahl der Streben 100, die von den Knotenpunkten 200 ausgehen, kann ≥ 4 bis ≤ 12 betragen, wobei auch in der Kristallographie nicht übliche oder nicht mögliche Koordinationszahlen realisiert werden können. Für die Ermittlung der Koordinationszahlen werden an der Außenfläche des Körpers liegende angeschnittene Knotenpunkte, wie in FIG. 1 mit Bezugszeichen 201 versehen, nicht berücksichtigt.

Das Vorliegen von nicht üblichen oder in der Kristallographie unmöglichen Koordinationszahlen kann insbesondere erreicht werden, wenn der Körper mittels additiver Fertigungstechniken hergestellt wird. Es ist ebenfalls möglich, dass eine erste Gruppe von Knotenpunkten 200 eine erste durchschnittliche Anzahl von Streben 100 aufweist und eine zweite Gruppe von Knotenpunkten eine zweite durchschnittliche Anzahl von Streben 100 aufweist, wobei die erste durchschnittliche Anzahl von der zweiten durchschnittlichen Anzahl verschieden ist.

In dem in FIG. 1 und 2 gezeigten Körper 10 sind die Knotenpunkte 200 in einem kubischraumzentrierten Gitter angeordnet. Ihre Koordinationszahl und somit die durchschnittliche Anzahl der Streben, die von ihnen ausgehen, beträgt 8.

Es ist möglich, dass der durchschnittliche minimale Winkel zwischen benachbarten Streben 100 ≥ 30° bis ≤ 140°, bevorzugt ≥ 45° bis ≤ 120°, mehr bevorzugt ≥ 50° bis ≤ 100° beträgt. Im Fall des in FIG. 1 und 2 gezeigten Körpers 10 beträgt überall der minimale Winkel zwischen den Streben 100 ca. 70,5° (arccos(1/3)), wie sich aus trigonometrischen Überlegungen zum Winkel zwischen den Raumdiagonalen eines Würfels ableiten lässt.

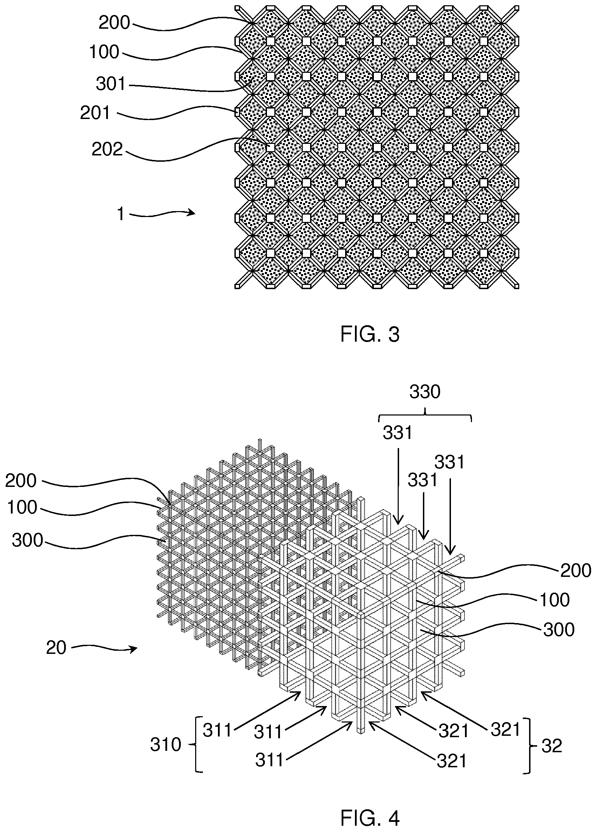

FIG. 3 zeigt ein offenbartes Verbund-Objekt 1 in Draufsicht. Ausgehend von dem in FIG. 1 und 2 gezeigten Körper liegt nun im Inneren des Körpers im Raum zwischen den Streben 100 ein Polymerschaum 301 vor. An den Außenflächen des in FIG. 3 gezeigten Verbund-Objekts 1 sind weiterhin mit den Bezugszeichen 201 und 202 angeschnittene Knotenpunkte gekennzeichnet.

Der Aufbau des Körpers kann, jedenfalls in Fällen einer regelmäßigen Anordnung der Knotenpunkte 200 im Raum, auch als Ergebnis des Durchdringens von hohlen Kanälen durch einen vormals massiven Körper 20 beschrieben werden. So kann mit Bezugnahme auf FIG. 4 der Raum 300 in Form von sich gegenseitig durchdringenden ersten 310, zweiten 320 und dritten 330 Kanalgruppen gebildet sein, wobei eine Mehrzahl von individuellen Kanälen 311, 321, 331 innerhalb ihrer jeweiligen Kanalgruppe parallel zueinander verlaufen und die erste Kanalgruppe 310, die zweite Kanalgruppe 320 und die dritte Kanalgruppe 330 sich in unterschiedliche Raumrichtungen erstrecken.

Der in FIG. 4 gezeigte Körper 20 weist in seinem in der Figur links dargestellten Abschnitt eine höhere räumliche Dichte an Knotenpunkten 200 auf als an seinem in der Figur rechts dargestellten Abschnitt. Zur besseren Verdeutlichung wird die zuvor genannte Ausführungsform anhand des rechts dargestellten Abschnitts diskutiert. Eine Schar 310 von individuellen Kanälen 311, deren Richtung durch Pfeile angegeben ist, erstreckt sich senkrecht zu der ihr zugewandten Fläche des Körpers durch den Körper hindurch. Selbstverständlich handelt es sich nicht nur um die drei mit Bezugszeichen identifizierten Kanäle, sondern sämtliche Kanäle, welche sich senkrecht zu der angegebenen Fläche durch den Körper hindurch erstrecken.

Das Gleiche gilt für die Kanäle 321 der Kanalgruppe 320 und die Kanäle 331 der Kanalgruppe 330, welche senkrecht zueinander und senkrecht zu den Kanäle 311 der ersten Kanalgruppe 310 verlaufen. Das Material des Körpers, welches zwischen den sich gegenseitig durchdringenden Kanälen 311, 321, 331 verbleibt, bildet die Streben 100 und Knotenpunkte 200.

Es ist möglich, dass die individuellen Kanäle 311, 321, 331 einen polygonalen oder runden Querschnitt aufweisen. Beispiele für polygonale Querschnitte sind dreieckige, viereckige, fünfeckige und sechseckige Querschnitte. In FIG. 4 dargestellt sind quadratische Querschnitte aller Kanäle 311, 321, 331. Es ist weiterhin möglich, dass innerhalb der ersten 310, zweiten 320 und dritten 330 Kanalgruppe die individuellen Kanälen 311, 321, 331 jeweils den gleichen Querschnitt aufweisen. Dieses ist in FIG. 4 dargestellt.

Es ist ebenfalls möglich, dass der Querschnitt der individuellen Kanäle 311 der ersten Kanalgruppe 310, der Querschnitt der individuellen Kanäle 321 der zweiten Kanalgruppe 320 und Querschnitt der individuellen Kanäle 331 der dritten Kanalgruppe 330 voneinander verschieden sind. Beispielsweise können die Kanäle 311 einen quadratischen, die Kanäle 321 einen runden und die Kanäle 331 einen sechseckigen Querschnitt aufweisen. Der Querschnitt der Kanäle bedingt die Form der Streben 100, so dass bei unterschiedlichen Querschnitten auch ein unterschiedliches Verhalten des Körpers 20 in Abhängigkeit der Raumrichtungen erreicht werden kann.

Die räumliche Dichte der Knotenpunkte 200 in einem ersten Bereich des Körpers 20 ist von der räumlichen Dichte der Knotenpunkte 200 in einem zweiten Bereich des Körpers 20 verschieden. Dieses ist schematisch in dem einstückigen Körper 20 gemäß FIG. 4 dargestellt. Wie bereits erwähnt weist der dort gezeigte Körper 20 in seinem in der Figur links dargestellten Abschnitt eine höhere räumliche Dichte an Knotenpunkten 200 auf als an seinem in der Figur rechts dargestellten Abschnitt. Nur jeder zweite Knotenpunkt 200 des linken Abschnitts bildet eine Strebe 100 zu einem Knotenpunkt 200 des rechten Abschnitts aus.

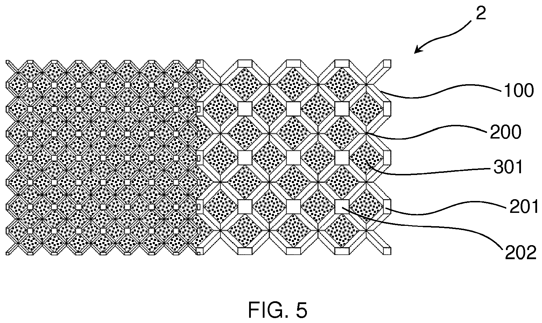

FIG. 5 zeigt ein erfindungsgemäßes Verbund-Objekt 2 in Draufsicht. Ausgehend von dem in FIG. 4 gezeigten Körper liegt nun im Inneren des Körpers im Raum zwischen den Streben 100 ein Polyurethanschaum 301 vor. An den Außenflächen des in FIG. 5 gezeigten Verbund-Objekts 2 sind weiterhin mit den Bezugszeichen 201 und 202 angeschnittene Knotenpunkte gekennzeichnet.

Ein weiteres Beispiel für ein erfindungsgemäßes Verbund-Objekt, welches nicht in den Figuren abgebildet ist, wäre ein Ball wie zum Beispiel ein Fußball.

Ein durch 3D-Drucken hergestellter Körper als innere Struktur mit einem sich baumartig verästelnden Netzwerk aus Streben und Knotenpunkten wird in einer kugelförmigen Schaumform ausgeschäumt, so dass ein Integralschaum mit geschlossener Oberfläche gebildet wird. Der Schaum kann eine Stauchhärte (40% Stauchung, DIN EN ISO 3386-1:2010-09) von ≤ 100 kPa und eine Dichte von ≤ 30 g/l aufweisen.

**Patentansprüche**

1. Verbund-Objekt (1, 2), umfassend einen Körper (10, 20) und einen festen Schaum (301), wobei

   der Körper (10, 20) mittels eines additiven Sinter-Fertigungsverfahrens hergestellt wurde und wenigstens formschlüssig mit dem Schaum verbunden ist, wobei das Material des Körpers (10, 20) von dem des Schaums (301) verschieden ist,
   der Körper (10, 20) zumindest teilweise aus einem thermoplastischen Polyurethan-Elastomer mit einer Dichte von ≥ 1 kg/l und einer Shore-Härte (DIN ISO 7619-1) von ≥ 50A und ≤ 98A gebildet ist,
   der Schaum (301) zumindest teilweise aus einem Polyurethanschaum gebildet ist,
   der Körper (10, 20) ein räumliches Netzwerk von durch Streben (100) miteinander verbundenen Knotenpunkten (200) und einem zwischen den Streben (100) vorliegenden Raum (300) umfasst,
   in dem zwischen den Streben (100) vorliegenden Raum zumindest teilweise der Polyurethanschaum (301) in fester Form vorliegt,
   der Raum zwischen den Streben (100) des Körpers (10, 20) ≥ 60% bis ≤ 90% des Volumens des Körpers ausmacht,
   in dem Körper (10, 20) die Streben (100) eine durchschnittliche Länge von ≥ 500 μm bis ≤ 50 mm aufweisen, die Streben (100) eine durchschnittliche Dicke von ≥ 500 μm bis ≤ 2.5 mm aufweisen und der Körper in mindestens einer Raumrichtung eine Stauchhärte (40% Stauchung, DIN EN ISO 3386-1:2010-09) von ≥ 20 bis ≤ 70 kPa aufweist,
   in dem Körper (10, 20) die Knotenpunkte (200) in zumindest einem Teil des Volumens des Körpers (10, 20) periodisch wiederkehrend verteilt sind,
   in dem Körper (20) die räumliche Dichte der Knotenpunkte (200) in einem ersten Bereich des Körpers (20) von der räumlichen Dichte der Knotenpunkte (200) in einem zweiten Bereich des Körpers (20) verschieden ist und
   die durchschnittliche räumliche Dichte der Knotenpunkte (200) im Körper (10, 20) ≥ 5000 Knotenpunkte/m³ bis ≤ 100000 Knotenpunkte/m³ beträgt.

2. Verbund-Objekt (1, 2) gemäß Anspruch 1, wobei das thermoplastische Polyurethan-Elastomer einen Schmelzbereich (DSC, Differential Scanning Calorimetry; zweite Aufheizung mit Aufheizrate 5 K/min) von ≥ 20 °C bis ≤ 240 °C aufweist und eine Schmelzvolumenrate (melt volume rate, MVR) gemäß ISO 1133 (240 °C, 10 kg) von ≥ 25 bis ≤ 250 cm³/10 min aufweist.

3. Verbund-Objekt (1, 2) gemäß Anspruch 1 oder 2, wobei das thermoplastische Polyurethan-Elastomer einen Schmelzbereich (DSC, Differential Scanning Calorimetry; zweite Aufheizung mit Aufheizrate 5 K/min) von ≥ 20 °C bis ≤ 240 °C aufweist,

   bei einer Temperatur T eine Schmelzvolumenrate (melt volume rate, MVR) gemäß ISO 1133 (10 kg) von 5 bis 15 cm³/10 min aufweist und eine Änderung der Schmelzvolumenrate (10 kg) bei einer Erhöhung dieser Temperatur T um 20 °C von ≤ 90 cm³/10 min aufweist.

4. Verbund-Objekt (1, 2) gemäß Anspruch 1, wobei das thermoplastische Polyurethan-Elastomer einen Schmelzbereich (DSC, differential scanning calorimetry; 2. Aufheizung mit Aufheizrate 5 K/min.) von ≥ 20 °C bis ≤ 100 °C aufweist und einen Betrag der komplexen Viskosität |$\eta^*$| (bestimmt durch Viskosimetriemessung in der Schmelze mit einem Kegel/Platte-Oszillationsscherviskosimeter bei 100 °C und einer Scherrate von 1/s) von ≥ 10 Pas bis ≤ 1000000 Pas aufweist.

5. Verbund-Objekt (1, 2) gemäß einem der Ansprüche 1 bis 4, wobei das thermoplastische Polyurethanelastomer erhältlich ist aus der Reaktion einer Polyisocyanatkomponente und einer Polyolkomponente, wobei die Polyolkomponente ein Polyesterpolyol umfasst, welches einen Stockpunkt (ASTM D5985) von ≥ 25 °C aufweist.

6. Verbund-Objekt (1, 2) gemäß einem der Ansprüche 1 bis 5, wobei das Verbund-Objekt (1, 2) einen Druckverformungsrest nach 10% Kompression (DIN ISO 815-1) von ≤ 2% aufweist.

7. Verbund-Objekt (1, 2) gemäß einem der Ansprüche 1 bis 6, wobei der Körper (20) vollständig in den Schaum eingebettet ist, so dass der Körper an keiner Stelle aus dem Schaum herausragt.

8. Verwendung eines Verbund-Objekts (1, 2) gemäß einem der Ansprüche 1 bis 7 als stützendes Element und/oder Lagerungselement.

**9.** Verfahren zur Herstellung eines Verbund-Objekts (1, 2) gemäß einem der Ansprüche 1 bis 7, umfassend die Schritte:

I') Herstellen eines Körpers (10, 20) mittels eines additiven Sinter-Fertigungsverfahrens zumindest teilweise aus einem thermoplastischen Polyurethan-Elastomer mit einer Dichte von ≥ 1 kg/l und einer Shore-Härte (DIN ISO 7619-1) von ≥ 50A und ≤ 98A, wobei der Körper (10, 20) ein räumliches Netzwerk von durch Streben (100) miteinander verbundenen Knotenpunkten (200) und einem zwischen den Streben (100) vorliegenden Raum (300) umfasst;

II') Kontaktieren des Körpers (10, 20) mit einer zu einem Polyurethanschaum reagierenden Reaktionsmischung, wobei die Reaktionsmischung zumindest teilweise in den Raum (300) zwischen den Streben (100) des Körpers (10, 20) eindringt;

III') Reagierenlassen der Reaktionsmischung zu einem Polyurethanschaum unter Erhalt des Verbund-Objekts (1, 2),

wobei der Körper (10, 20) ein räumliches Netzwerk von durch Streben (100) miteinander verbundenen Knotenpunkten (200) und einem zwischen den Streben (100) vorliegenden Raum (300) umfasst,

der Raum zwischen den Streben (100) des Körpers (10, 20) ≥ 60% bis ≤ 90% des Volumens des Körpers ausmacht,

in dem Körper (10, 20) die Streben (100) eine durchschnittliche Länge von ≥ 500 $\mu$m bis ≤ 50 mm aufweisen, die Streben (100) eine durchschnittliche Dicke von ≥ 500 $\mu$m bis ≤ 2.5 mm aufweisen und der Körper in mindestens einer Raumrichtung eine Stauchhärte (40% Stauchung, DIN EN ISO 3386-1:2010-09) von ≥ 20 bis ≤ 70 kPa aufweist,

in dem Körper (10, 20) die Knotenpunkte (200) in zumindest einem Teil des Volumens des Körpers (10, 20) periodisch wiederkehrend verteilt sind,

in dem Körper (20) die räumliche Dichte der Knotenpunkte (200) in einem ersten Bereich des Körpers (20) von der räumlichen Dichte der Knotenpunkte (200) in einem zweiten Bereich des Körpers (20) verschieden ist und

die durchschnittliche räumliche Dichte der Knotenpunkte (200) im Körper (10, 20) ≥ 5000 Knotenpunkte/m$^3$ bis ≤ 100000 Knotenpunkte/m$^3$ beträgt.

**Claims**

**1.** Composite article (1, 2) comprising a body (10, 20) and a solid foam (301), wherein

the body (10, 20) has been produced by means of an additive sintering manufacturing process and is at least positively joined to the foam, wherein the material of the body (10, 20) is different from that of the foam (301),

the body (10, 20) is at least partially formed from a thermoplastic polyurethane elastomer having a density of ≥ 1 kg/l and a Shore hardness (DIN ISO 7619-1) of ≥ 50A and ≤ 98A,

the foam (301) is at least partially formed from a polyurethane foam,

the body (10, 20) comprises a spatial network of node points (200) joined to one another by struts (100) and a space (300) present between the struts (100), the space present between the struts (100) is at least partially occupied by the polyurethane foam (301) in solid form, the space between the struts (100) of the body (10, 20) accounts for ≥ 60% to ≤ 90% of the volume of the body, in the body (10, 20) the struts (100) have an average length of ≥ 500 $\mu$m to ≤ 50 mm, the struts (100) have an average thickness of ≥ 500 $\mu$m to ≤ 2.5 mm and the body has in at least one spatial direction a compressive strength (40% compression, DIN EN ISO 3386-1:2010-09) of ≥ 20 to ≤ 70 kPa,

in the body (10, 20) the node points (200) are distributed in a periodically repeating manner in at least a portion of the volume of the body (10, 20),

in the body (20) the spatial density of the node points (200) in a first region of the body (20) is different from the spatial density of the node points (200) in a second region of the body (20) and

the average spatial density of the node points (200) in the body (10, 20) is ≥ 5000 node points/m$^3$ to ≤ 100 000 node points/m$^3$.

**2.** Composite article (1, 2) according to Claim 1, wherein the thermoplastic polyurethane elastomer has a melting range (DSC, differential scanning calorimetry; second heating at a heating rate of 5 K/min) of ≥ 20°C to ≤ 240°C and a melt volume rate (MVR) according to ISO 1133 (240°C, 10 kg) of ≥ 25 to ≤ 250 cm$^3$/10 min.

**3.** Composite article (1, 2) according to Claim 1 or 2, wherein the thermoplastic polyurethane elastomer has a melting range (DSC, differential scanning calorimetry; second heating at a heating rate of 5 K/min) of ≥ 20°C to ≤ 240°C,

has a melt volume rate (MVR) according to ISO 1133 (10 kg) at a temperature T of 5 to 15 cm$^3$/10 min and

exhibits a change in the melt volume rate (10 kg) at an increase of this temperature T by 20°C

of $\leq$ 90 cm$^3$/10 min.

4.  Composite article (1, 2) according to Claim 1, wherein the thermoplastic polyurethane elastomer has a melting range (DSC, differential scanning calorimetry; 2nd heating at a heating rate of 5 K/min) of $\geq$ 20 °C to $\leq$ 100 °C and has a magnitude of complex viscosity |$\eta$*| (determined by viscometry measurement in the melt with a cone/plate oscillation shear viscometer at 100°C and a shear rate of 1/s) of $\geq$ 10 Pas to $\leq$ 1 000 000 Pas.

5.  Composite article (1, 2) according to any of Claims 1 to 4, wherein the thermoplastic polyurethane elastomer is obtainable from the reaction of a polyisocyanate component and a polyol component, wherein the polyol component comprises a polyesterpolyol having a no-flow point (ASTM D5985) of $\geq$ 25°C.

6.  Composite article (1, 2) according to any of Claims 1 to 5, wherein the composite article (1, 2) has a compression set after 10% compression (DIN ISO 815-1) of $\leq$ 2%.

7.  Composite article (1, 2) according to any of Claims 1 to 6, wherein the body (20) is fully embedded in the foam so that the body does not protrude from the foam at any point.

8.  Use of a composite article (1, 2) according to any of Claims 1 to 7 as a supporting element and/or mounting element.

9.  Process for producing a composite article (1, 2) according to any of Claims 1 to 7 comprising the steps of:

    I') producing a body (10, 20) by means of an additive sintering manufacturing process at least partially from a thermoplastic polyurethane elastomer having a density of $\geq$ 1 kg/l and a Shore hardness (DIN ISO 7619-1) of $\geq$ 50A and $\leq$ 98A, wherein the body (10, 20) comprises a spatial network of node points (200) joined to one another by struts (100) and a space (300) present between the struts (100);
    II') contacting the body (10, 20) with a reaction mixture which reacts to afford a polyurethane foam, wherein the reaction mixture at least partially penetrates into the space (300) between the struts (100) of the body (10, 20) ;
    III') reacting the reaction mixture to afford a polyurethane foam to obtain the composite article (1, 2), wherein the body (10, 20) comprises a spatial network of node points (200) joined to one another by struts (100) and a space (300) present between the struts (100),

the space between the struts (100) of the body (10, 20) accounts for $\geq$ 60% to $\leq$ 90% of the volume of the body, in the body (10, 20) the struts (100) have an average length of $\geq$ 500 $\mu$m to $\leq$ 50 mm, the struts (100) have an average thickness of $\geq$ 500 $\mu$m to $\leq$ 2.5 mm and the body has in at least one spatial direction a compressive strength (40% compression, DIN EN ISO 3386-1:2010-09) of $\geq$ 20 to $\leq$ 70 kPa,
in the body (10, 20) the node points (200) are distributed in a periodically repeating manner in at least a portion of the volume of the body (10, 20),
in the body (20) the spatial density of the node points (200) in a first region of the body (20) is different from the spatial density of the node points (200) in a second region of the body (20) and the average spatial density of the node points (200) in the body (10, 20) is $\geq$ 5000 node points/m$^3$ to $\leq$ 100 000 node points/m$^3$.

**Revendications**

1.  Objet composite (1, 2), comprenant un corps (10, 20) et une mousse solide (301), le corps (10, 20) ayant été préparé au moyen d'un procédé de fabrication additive par frittage et étant relié au moins par complémentarité de forme à la mousse, le matériau du corps (10, 20) étant différent de celui de la mousse (301),

    le corps (10, 20) étant formé au moins partiellement à partir d'un élastomère de polyuréthane thermoplastique présentant une densité $\geq$ 1 kg/l et une dureté Shore (DIN ISO 7619-1) $\geq$ 50A et $\leq$ 98A,
    la mousse (301) étant formée au moins partiellement à partir d'une mousse de polyuréthane,
    le corps (10, 20) comprenant un réseau spatial de noeuds (200) reliés les uns aux autres par des entretoises (100) et un espace (300) situé entre les entretoises (100), la mousse de polyuréthane (301) sous forme solide se trouvant au moins partiellement dans l'espace situé entre les entretoises (100),
    l'espace entre les entretoises (100) du corps (10, 20) représentant de $\geq$ 60% à $\leq$ 90% du volume du corps,
    dans le corps (10, 20), les entretoises (100) présentant une longueur moyenne de $\geq$ 500 $\mu$m à $\leq$ 50 mm, les entretoises (100) présentant une épaisseur moyenne de $\geq$ 500 $\mu$m à $\leq$ 2,5 mm et le corps présentant, dans au moins une direction spatiale, une dureté à la compression (compression de 40%, DIN EN ISO 3386-1:2010-09) de $\geq$ 20 à $\leq$ 70 kPa,
    dans le corps (10, 20), les noeuds (200) étant répartis avec une récurrence périodique dans au moins une partie du corps (10, 20),

dans le corps (20), la densité spatiale des noeuds (200) dans une première zone du corps (20) étant différente de la densité spatiale des noeuds (200) dans une deuxième zone du corps (20) et

la densité spatiale moyenne des noeuds (200) dans le corps (10, 20) étant de $\geq 5000$ nœuds/m$^3$ à $\leq 100.000$ nœuds/m$^3$.

2. Objet composite (1, 2) selon la revendication 1, l'élastomère de polyuréthane thermoplastique présentant une plage de fusion (DSC, calorimétrie différentielle à balayage ; deuxième chauffage à une vitesse de chauffage de 5 K/min) de $\geq 20°C$ à $\leq 240°C$ et présentant un indice de fluidité à chaud en volume (melt volume rate, MVR) selon la norme ISO 1133 (240°C, 10 kg) de $\geq 25$ à $\leq 250$ cm$^3$/10 min.

3. Objet composite (1, 2) selon la revendication 1 ou 2, l'élastomère de polyuréthane thermoplastique présentant une plage de fusion (DSC, calorimétrie différentielle à balayage ; deuxième chauffage à une vitesse de chauffage de 5 K/min) de $\geq 20°C$ à $\leq 240°C$,

présentant, à une température T, un indice de fluidité à chaud en volume (melt volume rate, MVR) selon la norme ISO 1133 (10 kg) de 5 à 15 cm$^3$/10 min et

présentant une modification de l'indice de fluidité à chaud en volume (10 kg), à une augmentation de cette température T de 20°C, $\leq 90$ cm$^3$/10 min.

4. Objet composite (1, 2) selon la revendication 1, l'élastomère de polyuréthane thermoplastique présentant une plage de fusion (DSC, calorimétrie différentielle à balayage ; 2e chauffage à une vitesse de chauffage de 5 K/min.) de $\geq 20°C$ à $\leq 100°C$ et présentant une contribution de la viscosité complexe $|\eta^*|$ (déterminée par mesure de viscosimétrie dans la masse fondue à l'aide d'un viscosimètre par oscillation à cône/plaque à 100°C et à une vitesse de cisaillement de 1/s) de $\geq 10$ Pa.s à $\leq 1.000.000$ Pa.s.

5. Objet composite (1, 2) selon l'une des revendications 1 à 4, l'élastomère de polyuréthane thermoplastique pouvant être obtenu à partir de la réaction d'un composant de polyisocyanate et d'un composant de polyol, le composant de polyol comprenant un polyesterpolyol qui présente un point de figeage (ASTM D5985) $\geq 25°C$.

6. Objet composite (1, 2) selon l'une des revendications 1 à 5, l'objet composite (1, 2) présentant un déformation rémanente à la compression après une compression de 10% (DIN ISO 815-1) $\leq 2\%$.

7. Objet composite (1, 2) selon l'une des revendications 1 à 6, le corps (20) étant complètement incorporé dans la mousse, de telle sorte que le corps ne fait saillie nulle part hors de la mousse.

8. Utilisation d'un objet composite (1, 2) selon l'une des revendications 1 à 7 comme élément d'appui et/ou élément support.

9. Procédé pour la fabrication d'un objet composite (1, 2) selon l'une des revendications 1 à 7, comprenant les étapes :

I') fabrication d'un corps (10, 20) au moyen d'un procédé de fabrication additive par frittage au moins partiellement à partir d'un élastomère de polyuréthane thermoplastique présentant une densité $\geq 1$ kg/l et une dureté Shore (DIN ISO 7619-1) $\geq 50A$ et $\leq 98A$, le corps (10, 20) comprenant un réseau spatial de noeuds (200) reliés les uns aux autres par des entretoises (100) et un espace (300) situé entre les entretoises (100) ;

II') mise en contact du corps (10, 20) avec un mélange réactionnel réagissant en une mousse de polyuréthane, le mélange réactionnel pénétrant au moins partiellement dans l'espace (300) entre les entretoises (100) du corps (10, 20) ;

III') le fait de laisser réagir le mélange réactionnel en une mousse de polyuréthane avec obtention de l'objet composite (1, 2),

le corps (10, 20) comprenant un réseau spatial de noeuds (200) reliés les uns aux autres par des entretoises (100) et un espace (300) se trouvant entre les entretoises (100),

l'espace entre les entretoises (100) du corps (10, 20) représentant de $\geq 60\%$ à $\leq 90\%$ du volume du corps,

dans le corps (10, 20), les entretoises (100) présentant une longueur moyenne de $\geq 500$ $\mu$m à $\leq 50$ mm, les entretoises (100) présentant une épaisseur moyenne de $\geq 500$ $\mu$m à $\leq 2,5$ mm et le corps présentant, dans au moins une direction spatiale, une dureté à la compression (compression de 40%, DIN EN ISO 3386-1:2010-09) de $\geq 20$ à $\leq 70$ kPa,

dans le corps (10, 20), les noeuds (200) étant répartis avec une récurrence périodique dans au moins une partie du corps (10, 20),

dans le corps (20), la densité spatiale des noeuds (200) dans une première zone du corps (20) étant différente de la densité spatiale des noeuds (200) dans une deuxième zone du corps (20) et la densité spatiale moyenne des noeuds (200) dans le corps (10, 20) étant $\geq 5000$ nœuds/m$^3$ à $\leq 100.000$ nœuds/m$^3$.

FIG. 1

FIG. 2

FIG. 3

FIG. 4

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015100816 B3
- WO 2012028747 A1
- DE 4446450 C1
- EP 0991514 A1
- US 2002187857 A1
- CN 1331010 A
- US 20150040428 A1
- US 20100119792 A1
- US 20140101816 A1
- US 20160135537 A1
- DE 2901774 A
- EP 0192946 A1

**In der Beschreibung aufgeführte Nicht-Patentliteratur**

- **MAITI, A. et al.** 3D printed cellular solid outperforms traditional stochastic foam in long-term mechanical response. *Sci. Rep.,* 2016, vol. 6, 24871
- Polyurethane. **J.H. SAUNDERS ; K.C. FRISCH.** High Polymers. Verlag Interscience Publishers, 1962, vol. XVI
- **R. GÄCHTER ; H. MÜLLER.** Taschenbuch für Kunststoff- Additive. Hanser Verlag, 1990